(19) Europäisches Patentamt
European Patent Office
Office européen des brevets

(11) EP 2 424 936 B1

# (12) EUROPEAN PATENT SPECIFICATION

(45) Date of publication and mention of the grant of the patent:
**15.11.2017 Bulletin 2017/46**

(21) Application number: **10719163.7**

(22) Date of filing: **29.04.2010**

(51) Int Cl.:
***C08K 9/04*** *(2006.01)* ***C08K 3/00*** *(2006.01)*

(86) International application number:
**PCT/US2010/032956**

(87) International publication number:
**WO 2010/127106 (04.11.2010 Gazette 2010/44)**

## (54) COMPOSITE COMPOSITION

VERBUNDSTOFF ZUSAMMENSETZUNG

COMPOSITION DE COMPOSITE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **29.04.2009 US 173791 P**
**28.04.2010 US 769509**

(43) Date of publication of application:
**07.03.2012 Bulletin 2012/10**

(60) Divisional application:
**17176112.5**

(73) Proprietor: **Tundra Composites, LLC**
**White Bear Lake MN 55110 (US)**

(72) Inventors:
- **HEIKKILA, Kurt E.**
**Marine on the St. Croix**
**Minnesota 55047 (US)**
- **WILLIAMS, Rodney K.**
**Stacy**
**Minnesota 55079 (US)**
- **KROLL, John S.**
**Blaine**
**Minnesota 55434 (US)**

(74) Representative: **Beacham, Annabel Rose**
**Dehns**
**St Bride's House**
**10 Salisbury Square**
**London EC4Y 8JD (GB)**

(56) References cited:
**WO-A2-2005/049714**

- **"The effect of fillers on the mechanical properties of filled materials" In: G. Wypych: "Handbook of fillers 2nd Edition" 1999, Chem Tec Publishing , Toronto , XP002598932 ISBN: 1-895198-19-4 page 395**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 424 936 B1

## Description

### Field of the Invention

The invention relates to a composite of a nonmetallic, inorganic mineral particle and a polymer with modifiable properties to produced enhanced products. The novel properties are produced in the composite by novel interactions of the components. The inorganic mineral particle polymer composite materials are a unique combination of inorganic, non metallic or mineral typically particulate components and a polymer material that optimizes the composite structure and characteristics through blending the combined polymer and inorganic mineral particle materials to achieve true composite properties.

### Background of the Invention

Substantial attention has been paid to the creation of composite materials with unique properties. Included in this class of materials are materials with improved viscoelastic character, varying densities, varying surface characteristics and other properties which may be used to construct a material with improved properties. As an example, silica sand has been commonly used in applications such as abrasives. Sand paper is an example. However, sandpaper will lose abrasion capacity in a relatively short period of time depending on its application and its use over time.

Composite materials have been made for many years by combining generally two dissimilar materials to obtain beneficial properties from both. A true composite is unique because the interaction of the materials provides the best properties and characteristics of both components. Many types of composite materials are known. Generally, the art recognizes that combining metals of certain types and at proportions that form an alloy provides unique properties in metal/metal alloy materials. Metal/ceramic composites have been made typically involving combining metal powder or fiber with clay materials that can be sintered into a metal/ceramic composite.

Combining typically a thermoplastic or thermosetting polymer phase with a reinforcing powder or fiber produces a range of filled materials and, under the correct conditions, can form a true polymer composite. A filled polymer, with the additive as filler, cannot display composite properties. A filler material typically is comprised of inorganic materials that act as either pigments or extenders for the polymer systems. Fillers are often replacements for a more expensive component in the composition. A vast variety of fiber-reinforced composites have been made typically to obtain fiber reinforcement properties to improve the mechanical properties of the polymer in a specific composite.

Many of these materials containing polymer and particulate are admixtures and are not true composites. Admixtures are relatively easily separable into the constituent parts and, once separated, display the individual properties of the components. A true composite resists separation and displays enhanced properties of the input materials whereas the individual input materials often do not display the enhanced properties. A true composite does not display the properties of the individual components but display the unique character of the composite.

While a substantial amount of work has been done regarding composite materials generally, the use of inorganic, non metallic or mineral particles in a polymer composite has not been obtained. Tuning the density the formation of these materials into a composite of a polymer and an inorganic mineral or non-metal provides novel mechanical and physical properties into the composite and, when used, obtains properties that are not present in other materials. A need exists for material that has tunable density, low toxicity, and improved properties in terms of increased conformance, elasticity, and pliability.

### Brief Description of the Invention

The invention relates to a composite according to claim 1 of a non metallic, inorganic mineral particle and a polymer having improved and novel properties. The material of the invention is provided through a selection of non metallic, inorganic mineral particle species, particle size ($P_s$) distribution, polymer type, molecular weight, surface modification and processing conditions. The particles have a specific and novel particle morphology that cooperates with the components of the invention to provide the needed properties to the composite. The material attains adjustable chemical/physical properties through inorganic mineral particle selection and polymer selection. The resulting composite materials exceed the contemporary composites in terms of density, surface character, reduced toxicity, improved malleability, improved ductility, improved viscoelastic properties (such as tensile modulus, storage modulus, elastic-plastic deformation and others) electrical/magnetic properties, resistance to condition of electricity, vibration or sound, and machine molding properties. We have found that density and polymer viscoelasticity measured as elongation are useful properties and useful predictive parameters of a composite in this technology. In the production of useful enhanced properties, the packing of the selected particle sizes ($P_s$, $P_s^1$, etc.), distribution population particles, surface modification and the selection of the particulate or mixed non-metal, inorganic or mineral particulate, will obtain the enhanced properties, in part through novel extrusion processing.

## Brief Discussion of the Drawing

Figure 1 through 14 shows the nature of the properties of the composites of the invention.

## Detailed Discussion of the Invention

The invention relates to novel composites according to claim 1 made by combining an inorganic, non-metallic or mineral particulate with a polymer to achieve novel physical electrical surface and viscoelastic properties. Any inorganic mineral that can be formed into a particulate having a particle size ranging from about 5 $\mu$m to about 1,500 $\mu$m can be used in the invention. The maximum size is such that the particle size ($P_S$) of the particle is less than 20% of either the least dimension or the thinnest part under stress in an end use article. Such particles can be substantially spherical, but preferred materials are rough and have substantial particle morphology, are substantially amorphous or can achieve virtually any three-dimensional shape formable by small particle size materials.

Both thermoplastic and thermosetting resins can be used in the invention. Such resins are discussed in more detail below. In the case of thermoplastic resins, the composites are specifically formed by blending the particulate and interfacial modifier with thermoplastic and then forming the material into a finished composite. Thermosetting composites are made by combining the particulate and interfacial modifier with an uncured material and then curing the material into a finished composite.

In both cases, the particulate material is coated with an interfacial modifier, a surface chemical treatment that supports or enhancing the final properties of the composite.

A composite is more than a simple admixture. A composite is defined as a combination of two or more substances intermingled with various percentages of composition, in which each component results in a combination of separate materials, resulting in properties that are in addition to or superior to those of its constituents. In a simple admixture the mixed material have little interaction and little property enhancement. One of the materials is chosen to increase stiffness, strength or density. Atoms and molecules can form bonds with other atoms or molecules using a number of mechanisms. Such bonding can occur between the electron cloud of an atom or molecular surfaces including molecular-molecular interactions, atom-molecular interactions and atom-atom interactions. Each bonding mechanism involves characteristic forces and dimensions between the atomic centers even in molecular interactions. The important aspect of such bonding force is strength, the variation of bonding strength over distance and directionality. The major forces in such bonding include ionic bonding, covalent bonding and the van der Waals' (VDW) types of bonding. Ionic radii and bonding occur in ionic species such as $Na^+Cl^-$, $Li^+F^-$. Such ionic species form ionic bonds between the atomic centers. Such bonding is substantial, often substantially greater than 100 kJ-mol$^{-1}$ often greater than 250 kJ-mol$^{-1}$. Further, the interatomic distance for ionic radii tend to be small and of the order of 1-3 Å (1-3 x $10^{-10}$ m). Covalent bonding results from the overlap of electron clouds surrounding atoms forming a direct covalent bond between atomic centers. The covalent bond strengths are substantial, are roughly equivalent to ionic bonding and tend to have somewhat smaller interatomic distances.

The varied types of van der Waals' forces are different than covalent and ionic bonding. These van der Waals' forces tend to be forces between molecules, not between atomic centers. The van der Waals' forces are typically divided into three types of forces including dipole-dipole forces, dispersion forces and hydrogen bonding. Dipole-dipole forces are a van der Waals' force arising from temporary or permanent variations in the amount or distribution of charge on a molecule.

**TABLE 1-** Summary of Chemical Forces and Interactions

| Type of Interaction | Strength | Bond Nature | Strength Proportional to: |
|---|---|---|---|
| Covalent bond | Very strong | Comparatively long range | $r^{-1}$ |
| Ionic bond | Very strong | Comparatively long range | $r^{-1}$ |
| Ion-dipole | Strong | Short range | $r^{-2}$ |
| VDW Dipole-dipole | Moderately strong | Short range | $r^{-3}$ |
| VDW Ion-induced dipole | Weak | Very short range | $r^{-4}$ |
| VDW Dipole-induced dipole | Very weak | Extremely short range | $r^{-6}$ |
| VDW London dispersion forces | Very weak[a] | Extremely short range | $r^{-6}$ |
| [a] Since VDW London forces increase with increasing size and there is no limit to the size of molecules, these forces can become rather large. In general, however, they are very weak. | | | |

Dipole structures arise by the separation of charges on a molecule creating a generally or partially positive and a generally or partially negative opposite end. The forces arise from electrostatic interaction between the molecule negative and positive regions. Hydrogen bonding is a dipole-dipole interaction between a hydrogen atom and an electronegative region in a molecule, typically comprising an oxygen, fluorine, nitrogen or other relatively electronegative (compared to H) site. These atoms attain a dipole negative charge attracting a dipole-dipole interaction with a hydrogen atom having a positive charge. Dispersion force is the van der Waals' force existing between substantially non-polar uncharged molecules. While this force occurs in non-polar molecules, the force arises from the movement of electrons within the molecule. Because of the rapidity of motion within the electron cloud, the non-polar molecule attains a small but meaningful instantaneous charge as electron movement causes a temporary change in the polarization of the molecule. These minor fluctuations in charge result in the dispersion portion of the van der Waals' force.

Such VDW forces, because of the nature of the dipole or the fluctuating polarization of the molecule, tend to be low in bond strength, typically 50 kJ $mol^{-1}$ or less. Further, the range at which the force becomes attractive is also substantially greater than ionic or covalent bonding and tends to be about 3-10 Å (3-10 x $10^{-10}$ m).

In the van der Waals composite materials of this invention, we have found that the unique combination of particulate, the varying but controlled particle size of the particle component, the modification of the interaction between the particulate and the polymer, result in the creation of a unique van der Waals' bonding. The van der Waals' forces arise between particulate atoms/crystals in the particulate and are created by the combination of particle size, polymer and interfacial modifiers in the composite.

In the past, materials not fully accurately characterized as "composite" have merely comprised a polymer filled with particulate with little or no van der Waals' interaction between the particulate filler material. In the invention, the interaction between the selection of particle size distribution and interfacially modified polymer enables the particulate to achieve an intermolecular distance that creates a substantial van der Waals' bond strength. The prior art materials having little viscoelastic properties, do not achieve a true composite structure. This leads us to conclude that this intermolecular distance is not attained in the prior art. In the discussion above, the term "molecule" can be used to relate to a particle, a particle comprising non-metal crystal or an amorphous aggregate, other molecular or atomic units or subunits of non metal or inorganic mixtures. coin the composites of the invention, the van der Waals' forces occur between collections of metal atoms that act as "molecules" in the form of mineral, inorganic, or non-metal atom aggregates.

The composite of the invention is characterized by a composite having intermolecular forces between particles about 30 kJ-$mol^{-1}$ and a bond dimension of 3-10 Å (3-10 x $10^{-10}$ m). The particulate in the composite of the invention has a range of particle sizes such that about at least 5 wt.-% of particulate in the range of about 10 to 500 $\mu$m and about at least 5 wt.-% of particulate in the range of about 10 to 250 $\mu$m, and a polymer, the composite having a van der Waals' dispersion bond strength between molecules in adjacent particles of less than about 4 kJ-$mol^{-1}$ and a bond dimension of 1.4 to 1.9 Å (1.4-1.9 x $10^{-10}$ m) or less than about 2 kJ-$mol^{-1}$ and the van der Waals' bond dimension is about 1.5 to 1.8 Å (1.5-1.8 x $10^{-10}$ m).

In a composite, the reinforcement is usually much stronger and stiffer than the matrix, and gives the composite its good properties. The matrix holds the reinforcements in an orderly high-density pattern. Because the reinforcements are usually discontinuous, the matrix also helps to transfer load among the reinforcements. Processing can aid in the mixing and filling of the reinforcement or particulate. To aid in the mixture, an interfacial modifier can help to overcome the forces that prevent the matrix from forming a substantially continuous phase of the composite. The composite properties arise from the intimate association obtained by use of careful processing and manufacture.

We believe an interfacial modifier is an organic material that provides an exterior coating on the particulate promoting the close association (but with substantially no covalent bonding to the polymer or particle) of polymer and particulate. Minimal amounts of the modifier are used, i.e. 0.005 to 5 wt.-%, or about 0.02 to 3 wt.%. Such a coating can have a thickness of about 0.01 to 1 $\mu$m.

For the purpose of this disclosure, the term "particulate" typically refers to a material made into a product having a particle size greater than 10 $\mu$m and having a particle size distribution containing at least some particulate in the size range of 10 to 4000 $\mu$m. The particles have a range of sizes and circularity parameters. In a packed state, this particulate has an excluded volume of about 13 to 61 vol.-% or about 30 to 75 vol.-%. Alternatively, the particulate can have greater than about 30 vol.%, greater than about 40 vol.% or about 40 to 70 vol.-% particle loading. In this invention, the particulate can comprise two three or more particulates sources, in a blend of materials of differing chemical and physical nature. Regarding the particulate material, the term a "majority of the particulate" indicates that while the particulate can contain some small amount of small fines and some particles that are large with respect to the recited range, the majority (greater than 95%, 90%, 85%, etc.) fall within the recited range and contribute to the physical properties of the composite.

For the purpose of this disclosure, the term "non-metallic" relates to a material substantially free of a metal in an oxidation state, approximately 0.

For the purpose of this disclosure, the term "inorganic" relates to a material substantially free of carbon in the form or organic carbon or covalently bonded carbon compounds. Accordingly, compounds such as calcium carbonate or sodium bicarbonate are considered inorganic materials while most organic compounds including small molecules such as methane, ethane, ethylene, propylene, related polymer species, etc., are commonly considered organic materials. Other particulate material can be used in the inorganic compositions of the invention. Examples of such materials are as follows.

A "mineral" is defined as an element or chemical compound that is normally crystalline and that has been formed as a result of geological processes (Ernest H. Nickel, 1995, The definition of a mineral, The Canadian Mineralogist, vol. 33, pp. 689 - 690). For the purpose of this invention, the term "inorganic mineral" (mineral) is defined, as above, as an element or chemical compound that is normally crystalline and that has been formed as a result of geological processes. Other materials can be used in the composites of the invention including ceramics, hollow and solid glass spheres and other particulates.

A "hollow glass sphere or bubble" is defined as a glass body having a generally spherical shape having a hollow interior. The glass sphere typically has a particle size ($P_s$) that ranges from about 1 to 150 μm, typically about 10 to 120 μm, preferably about 10 to 100 μm. The internal space within the glass bubble typically ranges from about 5 to 120 μm, often about 6 to 100 μm. Solid glass spheres can have similar particle size ($P_s$).

A ceramic particle is typically defined as an inorganic crystalline oxide material. Ceramics are typically solid and inert. Ceramic materials tend to be brittle, hard, strong in compression and weak in shear or tension. Ceramics generally have a very high melting point that is typically greater than 1,000°C, but often ranges from 1,800 to 3,000°C and in some cases even higher. Traditionally, ceramic materials include various silicates, materials derived from clay, such as kaolinite. More recent ceramic materials include aluminum oxide, silicon carbide and tungsten carbide. Other ceramics include oxides of aluminum and zirconium. Non-oxide ceramics include metal carbides, metal borides, metal nitrides and metal silicides.

A "inorganic mineral" as understood in the context of this application includes natural inorganic materials that are not ceramics as defined above. Inorganic compounds are considered to be of a mineral, not biological origin. Inorganic minerals as understood in this application do not include organo, metallic chemistry compounds including metal ions surround by organic ligands. Inorganic compound as minerals typically include inorganic minerals that are found in nature or their synthetic equivalents. Commonly available inorganic minerals include mineral carbonates, mineral aluminates, mineral alumo-silicates, mineral oxides, mineral hydroxides, mineral bicarbonates, mineral sulfates, mineral fluorides, mineral phosphates, mineral alumo-phosphates, mineral alumo-silicates. Examples of inorganic minerals include bauxite (aluminum ore), calcium carbonate, calcium hydroxide, calcium sulfate, cuprous and cupric sulfide, lead oxide, magnesium carbonate, magnesium oxide, magnesium sulfate, magnesium alum compounds, such as potassium alumo-silicate, potassium borate, potassium carbonate, potassium sulfate and other compounds, including sodium silicate, sodium sulfate, etc.

## Particle Morphology Index

The interfacial modification technology depends on the ability to isolate the particles from that of the continuous polymer phase. The isolation of the particulates requires placement of a continuous molecular layer(s) of interfacial modifier to be distributed over the surface of the particles. Once this layer is applied, the behavior at the interface of the interfacial modifier to polymer dominates the physical properties of the composite (e.g. tensile and elongation behavior) while the bulk nature of the particle dominates the bulk material characteristics of the composite (e.g. density, thermal conductivity, compressive strength). The correlation of particulate bulk properties to that of the final composite is especially strong due to the high volume percentage loadings of particulate phase associated with the technology.

There are two key attributes of the particle surface that dictate the ability to be successfully interfacially modified: 1) The overall surface area of the particles on a large scale; large being defined as about 100X or more compared to the molecular size of the interfacial modifier. In the case of NZ-12, the molecular diameter is about 2260 ρm and 2) Particle surface characteristics that are on the order of the size of the interfacial modifier being applied.

The following particle morphology attributes specifically contribute to the ability to effectively interfacially modify the particles. Combining the different particle attributes we have derived a particle morphology index. Discussion will reveal that vastly different particle types can be effectively modified from large, smooth, round, and impervious surface types (low particle morphology index) to small, rough, irregular and porous (high particle morphology index):

### Particle size ($P_s$)

A wide range of particle sizes can be effectively interfacially modified. Successful modification has been completed with particles with a major dimension as small as -635 US mesh (< 20 μm) to particles as large as -40US mesh (-425 μm). Undoubtedly, larger particle sizes can be effectively modified (1,500 μm or greater). The absolute size of the particle being modified is not important; the relative size of the major dimension of the largest particle to the minimum critical dimension of the end article is more important. Our composite experience guides us that the major dimension of the largest particles should not be more than 1/5$^{th}$ of the minimum critical dimension of the end article.

As the particles become smaller the particulate surface area increases. For smooth spheres of a constant density, there is 28 times more surface area in spheres of 15 μm than 425 μm particle size ($P_s$) within a given mass of material. There is 100 times the surface area for particles of 1,500 μm particle size ($P_s$) compared to 15 μm.

Dosage levels of interfacial modifier have been effectively adjusted to compensate for changes in surface area due to particle size shifts.

Particle shape/aspect ratio ($P_{sh}$)

The benefits of interfacial modification is independent of overall particle shape. Particles with an aspect ratio of 1 (glass bubbles of iM30K and ceramic G200 microspheres) to 10 (some particularly irregularly shaped garnet) have been favorably interfacially modified. The current upper limit constraint is associated with challenges of successful dispersion of fibers within laboratory compounding equipment without significantly damaging the high aspect ratio fibers. Furthermore, inherent rheological challenges are associated with high aspect ratio fibers. With proper engineering, the ability to successfully compound and produce interfacially modify fibers of fiber fragments with aspect ratio in excess of 10 is envisioned.

At a given minor axis particle dimension, the relationship of particle aspect ratio to surface area is given by:

$$\text{Sphere} = \pi D^2;$$

and

$$\text{ARobject} = \pi D^2 (r_a + 0.5);$$

wherein D is diameter or particle size ($P_s$), $r_a$ is aspect ratio.

For a given minor dimension, the surface area of a particle with an aspect ratio of 10 has 10.5 times the surface area than a spherical particle. Dosage levels of interfacial modifier can be adjusted to compensate for the variance in surface area due to shape effects.

Particle roughness ($P_r$)

Macroscopic particle roughness (defined here as 100X the diameter of the interfacial modifier) can be defined by the circularity of the particle. It has been shown that interfacially modified mineral or inorganic particulates with rough and substantially non-spherical shapes obtain the similar advantageous rheology and physical property results as regularly shaped particles. The circularity or roughness of the particle can be measured by microscopic inspection of the particles in which an automated or manual measurement of roughness can be calculated. In such a measurement, the perimeter of a representative selection of the particulate is selected and the area of the particle cross section is also measured. The circularity of the particle is calculated by the following formula:

$$\text{Circularity} = (\text{perimeter})^2 / \text{area}.$$

Such materials such as the ceramic microspheres and hollow glass bubbles have a circularity of 4π (for smooth spherical particles) to 50 (smooth particles with an aspect ratio of 10). Many inorganic and mineral particulate have an oblong, multi lobe, rough non-regular shape or aspect. Such materials have a circularity of 13 to 35 or 13 to 30 and obtain the improved viscoelastic properties of the invention. Using proper optical and image analysis techniques the decoupling of surface roughness and aspect ratio can be determined under the appropriate magnification to quantify large scale particle roughness. The multiplier for the derivation of the particle morphology index must be adjusted for the aspect ratio of the particle.

An alternative to optical procedures consists of using a BET analysis to determine the specific surface area of the particulate phase. The specific surface area captures both the macroscopic particle roughness and particle porosity discussed below for particles of a specific particle size and shape distribution.

Particle Porosity ($P_p$)

The interfacial modifiers are quite large, on the order of a few hundred to a few thousand molecular weight.

Within a class of compounds, the effective diameter of the modifier molecule is proportional to the molecular weight. The predicted diameter of the NZ-12 zirconate modifier is 2260 picometer with a molecular weight of 2616 g/mol. The minimum size of the modifier molecules would be about 400 picometer (assuming a molecular weight of 460 g/mol). The size of the titanate modifiers would be slightly smaller than the corresponding zirconate for a corresponding given organophosphate structure.

Literature review of BET surface analysis reveals a large difference in particle surface area of mineral particles (from 0.1 to > 100 $m^2$-$gm^{-1}$). Nonporous spheres with a diameter of 1,500 micron results in a specific area of 0.017 $m^2$-$gm^{-1}$. In all cases, successful interfacial modification of the particulates is possible via changes in modifier loading. It is important to note that required increase in dosage is not directly proportional to the BET surface measurements. The pore size penetrable by the BET probing gas is significantly smaller (20.5 $A^2$ for krypton for example) than the interfacial modifier. Silica sand had a pore size of 0.90 nm as determined by BET analysis, the interfacial modifier molecule is able to bridge the pore opening. It will be possible to successfully interfacially modify porous absorbents such that the particles composite rheology is improved while absorbent properties of the particulate are maintained due to the relative size differences in the interfacial modifier (large), pore size being bridged (small), and the size of the absorbent molecule (nitrogen, argon, water, etc.) diffusing through the interfacial modifier into the absorbent particulate.

The particle morphology index is defined as:

$$PMI = (P_s)\,(P_{sh})\,(P_r)\,(P_p)$$

For large, spherical, smooth, non-porous particles the particle morphology index = 1 to 200. For small, rough, porous particles with an aspect ratio of 10, the maximum particle morphology index = 100 x 10.5 x 100/0.1 = $10^6$. Certain particles with a range of sizes or particle size ($P_s$) and aspect ratios, some roughness and porosity can range from 200 to $10^4$. Other particles with a broadened range of sizes or particle size ($P_s$) and aspect ratios, substantial roughness and increased porosity can range from $2x10^4$ to $10^6$. The amount of interfacial modifier increases with the particle morphology index.

The result of the above particle attributes (particle size and distribution, particle shape, and roughness) results in a specific particle packing behavior. The relationship of these variables leads to a resultant packing fraction. Packing fraction is defined as:

$$P_f = P_d / d_{pync}$$

wherein $P_f$ = packing fraction; $P_d$ = packing density and $d_{pync}$ = pyncnometer density. The relationship of these variables upon particle packing behavior is well characterized and used within powdered metallurgy science. For the case of spherical particles, it is well known that particle packing increases when the size difference between large to small particles increases. With a size ratio of 73 parts by weight large particle : 27 parts by weight small, monodispersed spheres with a 7:1 size ratio, the small particles can fit within interstitial spaces of the large particles resulting in a packing level of about 86 volume percent. In practice, it is not possible to attain monodispersed spheres. We have found that increased packing is best when using particles of broad particle size distribution with as large of a size difference between them as possible. In cases like these, we have found packing percentages approaching 80 volume %.

For composites containing high volumetric loading of spherical particles, the rheological behavior of the highly packed composites depends on the characteristics of the contact points between the particles and the distance between particles. When forming composites with polymeric volumes approximately equal to the excluded volume of the particulate phase, inter-particle interaction dominates the behavior of the material. Particles contact one another and the combination of interacting sharp edges, soft surfaces (resulting in gouging) and the friction between the surfaces prevent further or optimal packing. Interfacial modifying chemistries are capable of altering the surface of the particulate by coordination bonding, Van der Waals forces, covalent bonding, or a combination of all three. The surface of the interfacially modified particle behaves as a particle of the interfacial modifier. These organics reduce the friction between particles preventing gouging and allowing for greater freedom of movement between particles. The benefits of utilizing particles in the aforementioned acceptable particle morphology index range does not become evident until packing to a significant proportion of the maximum packing fraction; this value is typically greater than approximately 40 volume % particle phase of the composite.

The spatial character of the particles of the invention can be defined by the circularity of the particle and by its aspect ratio. One surprising aspect of the invention is that even a particle that depart from smooth spherical particle shape and are non-spherical or have substantial aspect ratio are efficiently packed in the composite of the invention. Mineral or inorganic particulates with amorphous, rough and substantially non-spherical shapes obtain the same advantageous rheology as regularly shaped particles. The aspect ratio of the more regular particles of the invention should be less than 1:5 and often less than 1:1.5. Similarly, the particulate with an aspect ratio of less than 10 or about 5 :1 also obtain the benefits of the composites of the invention.

We have found that the use of the interfacial modifier disclosed in this application obtains a close association of both spherical and substantially aspherical particles such that effective composites can be made even with particles that substantially depart from the ideal spherical particle. Many inorganic or mineral particles, depending on source and processing can have a narrow particle size distribution, a very regular surface, a low aspect ratio and substantial circularity while other such particles can have a very amorphous non-regular geometry and surface characteristic. We have found that the processes of the invention and the composites made using the interfacial modifier of the invention can obtain useful composites from most particle species disclosed herein.

In the composites of the invention, the van der Waals' forces occur between collections of inorganic mineral particles that act as "molecules" in the form of crystals or other mineral particle aggregates. The composite of the invention is characterized by a composite having intermolecular forces between inorganic mineral particulates that are in the range of van der Waals' strength, i.e., ranges and definitions if appropriate.

In a composite, the inorganic mineral particle is usually much stronger and stiffer than the matrix, and gives the composite its designed properties. The matrix holds the inorganic mineral particle s in an orderly high-density pattern. Because the inorganic mineral particles are usually discontinuous, the matrix also helps to transfer load among the inorganic mineral particles. Processing can aid in the mixing and filling of the inorganic mineral particle. To aid in the mixture, an interfacial modifier, a surface chemical treatment or modifier can help to overcome the forces that prevent the matrix from forming a substantially continuous phase of the composite. The tunable composite properties arise from the intimate association obtained by use of careful processing and manufacture. We believe a surface chemical reagent is an organic material that provides an exterior coating on the particulate promoting the close association of polymer and particulate. Minimal amounts of the interfacial modifier are used, i.e. 0.005 to 5 wt.-%, or about 0.02 to 3 wt.%. Higher amounts are used to coat materials with increased morphology.

Examples of minerals that are useful to the invention include Carbides, Nitrides, Silicides and Phosphides; Sulphides, Selenides, Tellurides, Arsenides and Bismuthides; Oxysulphides; Sulphosalts, such as Sulpharsenites, Sulphobismuthites, Sulphostannates, Sulphogermanates, Sulpharsenates, Sulphantimonates, Sulphovanadates and Sulphohalides; Oxides and Hydroxides; Halides, such as Fluorides, Chlorides, Bromides and Iodides; Fluoborates and Fluosilicates; Borates; Carbonates; Nitrates; Silicates; Silicates of Aluminum; Silicates Containing Aluminum and other Metals; Silicates Containing other Anions; Niobates and Tantalates; Phosphates; Arsenates such as arsenates with phosphate (without other anions); Vanadates (vanadates with arsenate or phosphate); Phosphates, Arsenates or Vanadates; Arsenites; Antimonates and Antimonites; Sulphates; Sulphates with Halide; Sulphites, Chromates, Molybdates and Tungstates; Selenites, Selenates, Tellurites, and Tellurates; Iodates; Thiocyanates; Oxalates, Citrates, Mellitates and Acetates include the arsenides, antimonides and bismuthides of e.g., metals such as Li, Na, Ca, Ba, Mg, Mn, Al, Ni, Zn, Ti, Fe, Cu, Ag and Au.

Garnet, is an important mineral and is a nesosilicate that complies with general formula $X_3Y_2(SiO_4)_3$. The X is divalent cation, typically $Ca^{2+}$, $Mg^{2+}$, $Fe^{2+}$ etc. and the Y is trivalent cation, typically $Al^{3+}$, $Fe^{3+}$, $Cr^{3+}$, etc. in an octahedral/tetrahedral framework with $[SiO_4]^{4-}$ occupying the tetrahedra. Garnets are most often found in the dodecahedral form, less often in trapezo-hedral form.

One important inorganic material that can be used as a particulate in the invention includes silica, silicon dioxide ($SiO_2$). Silica is commonly found as sand or as quartz crystalline materials. Also, silica is the major component of the cell walls of diatoms commonly obtained as diatomaceous earth. Silica in the form of fused silica or glass has fused silica or silica line-glass as fumed silica, as diatomaceous earth or other forms of silica as a material density of about 2.7 $gm\text{-}cm^{-3}$ but a particulate density that ranges from about 1.5 to 2 $gm\text{-}cm^{-3}$.

Typically, the composite materials of the invention are manufactured using melt processing and are also utilized in product formation using melt processing. A typical thermoplastic polymer material, is combined with particulate and processed until the material attains (e.g.) a uniform density (if density is the characteristic used as a determinant). Alternatively, in the manufacture of the material, the inorganic mineral or the thermoplastic polymer may be blended with interfacial modification agents and the modified materials can then be melt processed into the material. Once the material attains a sufficient property, such as, for example, density, the material can be extruded into a product or into a raw material in the form of a pellet, chip, wafer, proform or other easily processed material using conventional processing techniques.

In the manufacture of useful products with the composites of the invention, the manufactured composite can be obtained in appropriate amounts, subjected to heat and pressure, typically in extruder equipment and then formed into an appropriate shape having the correct amount of materials in the appropriate physical configuration. In the appropriate product design, during composite manufacture or during product manufacture, a pigment or other dye material can be added to the processing equipment. One advantage of this material is that an inorganic dye or pigment can be co-processed resulting in a material that needs no exterior painting or coating to obtain an attractive, functional, or decorative appearance. The pigments can be included in the polymer blend, can be uniformly distributed throughout the material and can result in a surface that cannot chip, scar or lose its decorative appearance. One particularly important pigment material comprises titanium dioxide ($TiO_2$). This material is extremely non-toxic, is a bright white particulate that can be easily combined with either inorganic mineral particulates or polymer composites to enhance the novel characteristics of the composite material and to provide a white hue to the ultimate composite material.

We have further found that a blend of two, three or more inorganic minerals in particulate form can, obtain important composite properties from all of particulate materials in a polymer composite structure. Such composites each can have unique or special properties. These composite processes and materials have the unique capacity and property that the composite acts as an blended composite of two or three different inorganic minerals that could not, due to melting point and other processing difficulties, be made into a blend without the methods of the invention.

A large variety of polymer materials can be used in the composite materials of the invention. For the purpose of this application, a polymer is a general term covering either a thermoset or a thermoplastic. We have found that polymer materials useful in the invention include both condensation polymeric materials and addition or vinyl polymeric materials. Included are both vinyl and condensation polymers, and polymeric alloys thereof. Vinyl polymers are typically manufactured by the polymerization of monomers having an ethylenically unsaturated olefinic group. Condensation polymers are typically prepared by a condensation polymerization reaction which is typically considered to be a stepwise chemical reaction in which two or more molecules combined, often but not necessarily accompanied by the separation of water or some other simple, typically volatile substance. Such polymers can be formed in a process called polycondensation. The polymer has a density of at least 0.85 gm-cm$^{-3}$, however, polymers having a density of greater than 0.96 are useful to enhance overall product density. A density is often up to 1.7 or up to 2 gm-cm$^{-3}$ or can be about 1.5 to 1.95 gm-cm$^{-3}$.

Vinyl polymers include polyethylene, polypropylene, polybutylene, acrylonitrile-butadiene-styrene (ABS), polybutylene copolymers, polyacetyl resins, polyacrylic resins, homopolymers or copolymers comprising vinyl chloride, vinylidene chloride, fluorocarbon copolymers, etc. Condensation polymers include nylon, phenoxy resins, polyarylether such as polyphenylether, polyphenylsulfide materials; polycarbonate materials, chlorinated polyether resins, polyethersulfone resins, polyphenylene oxide resins, polysulfone resins, polyimide resins, thermoplastic urethane elastomers and many other resin materials.

Condensation polymers that can be used in the composite materials of the invention include polyamides, polyamide-imide polymers, polyarylsulfones, polycarbonate, polybutylene terephthalate, polybutylene naphthalate, polyetherimides, polyethersulfones, polyethylene terephthalate, thermoplastic polyamides, polyphenylene ether blends, polyphenylene sulfide, polysulfones, thermoplastic polyurethanes and others. Preferred condensation engineering polymers include polycarbonate materials, polyphenyleneoxide materials, and polyester materials including polyethylene terephthalate, polybutylene terephthalate, polyethylene naphthalate and polybutylene naphthalate materials.

Polycarbonate engineering polymers are high performance, amorphous engineering thermoplastics having high impact strength, clarity, heat resistance and dimensional stability. Polycarbonates are generally classified as a polyester or carbonic acid with organic hydroxy compounds. The most common polycarbonates are based on phenol A as a hydroxyl compound copolymerized with carbonic acid. Materials are often made by the reaction of a biphenyl A with phosgene ($O{=}CCl_2$). Polycarbonates can be made with phthalate monomers introduced into the polymerization extruder to improve properties such as heat resistance, further trifunctional materials can also be used to increase melt strength or extrusion blow molded materials. Polycarbonates can often be used as a versatile blending material as a component with other commercial polymers in the manufacture of alloys. Polycarbonates can be combined with polyethylene terephthalate acrylonitrile-butadiene-styrene, styrene maleic anhydride and others. Preferred alloys comprise a styrene copolymer and a polycarbonate. Preferred polycarbonate materials should have a melt index between 0.5 and 7, preferably between 1 and 5 gms/10 min.

A variety of polyester condensation polymer materials including polyethylene terephthalate, polybutylene terephthalate, polyethylene naphthalate, polybutylene naphthalate, etc. can be useful in the composites of the invention. Polyethylene terephthalate and polybutylene terephthalate are high performance condensation polymer materials. Such polymers often made by a copolymerization between a diol (ethylene glycol, 1,4-butane diol) with dimethyl terephthalate. In the polymerization of the material, the polymerization mixture is heated to high temperature resulting in the transesterification reaction releasing methanol and resulting in the formation of the engineering plastic. Similarly, polyethylene naphthalate and polybutylene naphthalate materials can be made by copolymerizing as above using as an acid source, a naphthalene dicarboxylic acid. The naphthalate thermoplastics have a higher Tg and higher stability at high temperature compared to the terephthalate materials. However, all these polyester materials are useful in the composite materials of the invention. Such materials have a preferred molecular weight characterized by melt flow properties. Useful polyester materials have a viscosity at 265°C of about 500-2000 cP (0.5 to 2 Pa.s), preferably about 800-1300 cP (0.8 to 1.3 Pa.s).

Polyphenylene oxide materials are engineering thermoplastics that are useful at temperature ranges as high as 330°C. Polyphenylene oxide has excellent mechanical properties, dimensional stability, and dielectric characteristics. Commonly, phenylene oxides are manufactured and sold as polymer alloys or blends when combined with other polymers or fiber. Polyphenylene oxide typically comprises a homopolymer of 2,6-dimethyl-1-phenol. The polymer commonly known as poly(oxy-(2,6-dimethyl-1,4-phenylene)). Polyphenylene is often used as an alloy or blend with a polyamide, typically nylon 6-6, alloys with polystyrene or high impact styrene and others. A preferred melt index (ASTM 1238) for the polyphenylene oxide material useful in the invention typically ranges from about 1 to 20, preferably about 5 to 10 gm/10 min. The melt viscosity is about 1000 cP (1 Pa.s) at 265°C.

Another class of thermoplastic include styrenic copolymers. The term styrenic copolymer indicates that styrene is copolymerized with a second vinyl monomer resulting in a vinyl polymer. Such materials contain at least a 5 mol-% styrene and the balance being 1 or more other vinyl monomers. An important class of these materials are styrene acrylonitrile (SAN) polymers. SAN polymers are random amorphous linear copolymers produced by copolymerizing styrene acrylonitrile and optionally other monomers. Emulsion, suspension and continuous mass polymerization techniques have been used. SAN copolymers possess transparency, excellent thermal properties, good chemical resistance and hardness. These polymers are also characterized by their rigidity, dimensional stability and load bearing capability. Olefin modified SAN's (OSA polymer materials) and acrylic styrene acrylonitriles (ASA polymer materials) are known. These materials are somewhat softer than unmodified SAN's and are ductile, opaque, two phased terpolymers that have surprisingly improved weatherability.

ASA polymers are random amorphous terpolymers produced either by mass copolymerization or by graft copolymerization. In mass copolymerization, an acrylic monomer styrene and acrylonitrile are combined to form a heteric terpolymer. In an alternative preparation technique, styrene acrylonitrile oligomers and monomers can be grafted to an acrylic elastomer backbone. Such materials are characterized as outdoor weatherable and UV resistant products that provide excellent accommodation of color stability property retention and property stability with exterior exposure. These materials can also be blended or alloyed with a variety of other polymers including polyvinyl chloride, polycarbonate, polymethyl methacrylate and others. An important class of styrene copolymers includes the acrylonitrile-butadiene-styrene monomers. These polymers are very versatile family of engineering thermoplastics produced by copolymerizing the three monomers. Each monomer provides an important property to the final terpolymer material. The final material has excellent heat resistance, chemical resistance and surface hardness combined with processability, rigidity and strength. The polymers are also tough and impact resistant. The styrene copolymer family of polymers have a melt index that ranges from about 0.5 to 25, preferably about 0.5 to 20.

An important class of engineering polymers that can be used in the composites of the invention include acrylic polymers. Acrylics comprise a broad array of polymers and copolymers in which the major monomeric constituents are an ester acrylate or methacrylate. These polymers are often provided in the form of hard, clear sheet or pellets. Acrylic monomers polymerized by free radical processes initiated by typically peroxides, azo compounds or radiant energy. Commercial polymer formulations are often provided in which a variety of additives are modifiers used during the polymerization provide a specific set of properties for certain applications. Pellets made for polymer grade applications are typically made either in bulk (continuous solution polymerization), followed by extrusion and pelleting or continuously by polymerization in an extruder in which unconverted monomer is removed under reduced pressure and recovered for recycling. Acrylic plastics are commonly made by using methyl acrylate, methylmethacrylate, higher alkyl acrylates and other copolymerizable vinyl monomers. Preferred acrylic polymer materials useful in the composites of the invention has a melt index of about 0.5 to 50, preferably about 1 to 30 gm/10 min.

Vinyl polymer polymers include a acrylonitrile; polymer of alpha-olefins such as ethylene, propylene, etc.; chlorinated monomers such as vinyl chloride, vinylidene dichloride, acrylate monomers such as acrylic acid, methylacrylate, methylmethacrylate, acrylamide, hydroxyethyl acrylate, and others; styrenic monomers such as styrene, alphamethyl styrene, vinyl toluene, etc.; vinyl acetate; and other commonly available ethylenically unsaturated monomer compositions.

Polymer blends or polymer alloys can be useful in manufacturing the pellet or linear extrudate of the invention. Such alloys typically comprise two miscible polymers blended to form a uniform composition. Scientific and commercial progress in the area of polymer blends has lead to the realization that important physical property improvements can be made not by developing new polymer material but by forming miscible polymer blends or alloys. A polymer alloy at equilibrium comprises a mixture of two amorphous polymers existing as a single phase of intimately mixed segments of the two macro molecular components. Miscible amorphous polymers form glasses upon sufficient cooling and a homogeneous or miscible polymer blend exhibits a single, composition dependent glass transition temperature (Tg). Immiscible or non-alloyed blend of polymers typically displays two or more glass transition temperatures associated with immiscible polymer phases. In the simplest cases, the properties of polymer alloys reflect a composition weighted average of properties possessed by the components. In general, however, the property dependence on composition varies in a complex way with a particular property, the nature of the components (glassy, rubbery or semi-crystalline), the thermodynamic state of the blend, and its mechanical state whether molecules and phases are oriented.

The primary requirement for the substantially thermoplastic engineering polymer material is that it retains sufficient thermoplastic properties such as viscosity and stability, to permit melt blending with a particulate, permit formation of linear extrudate pellets, and to permit the composition material or pellet to be extruded or injection molded in a thermoplastic process forming the useful product. Engineering polymer and polymer alloys are available from a number of manufacturers including Dyneon LLC, B.F. Goodrich, G.E., Dow, and duPont.

Polyester polymers are manufactured by the reaction of a dibasic acid with a glycol. Dibasic acids used in polyester production include phthalic anhydride, isophthalic acid, maleic acid and adipic acid. The phthalic acid provides stiffness, hardness and temperature resistance; maleic acid provides vinyl saturation to accommodate free radical cure; and adipic acid provides flexibility and ductility to the cured polymer. Commonly used glycols are propylene glycol which reduces crystalline tendencies and improves solubility in styrene. Ethylene glycol and diethylene glycol reduce crystallization tendencies. The diacids and glycols are condensed eliminating water and are then dissolved in a vinyl monomer to a suitable viscosity. Vinyl monomers include styrene, vinyltoluene, paramethylstyrene, methylmethacrylate, and diallyl phthalate. The addition of a polymerization initiator, such as hydroquinone, tertiary butylcatechol or phenothiazine extends the shelf life of the uncured polyester polymer. Polymers based on phthalic anhydride are termed orthophthalic polyesters and polymers based on isophthalic acid are termed isophthalic polyesters. The viscosity of the unsaturated polyester polymer can be tailored to an application. Low viscosity is important in the fabrication of fiber-reinforced composites to ensure good wetting and subsequent high adhesion of the reinforcing layer to the underlying substrate. Poor wetting can result in large losses of mechanical properties. Typically, polyesters are manufactured with a styrene concentration or other monomer concentration producing polymer having an uncured viscosity of 200-1,000 mPa.s(cP). Specialty polymers may have a viscosity that ranges from about 20 cP to 2,000 cP (0.02 to 2 Pa.s). Unsaturated polyester polymers are typically cured by free radical initiators commonly produced using peroxide materials. Wide varieties of peroxide initiators are available and are commonly used. The peroxide initiators thermally decompose forming free radical initiating species.

Phenolic polymers can also be used in the manufacture of the structural members of the invention. Phenolic polymers typically comprise a phenol-formaldehyde polymer. Such polymers are inherently fire resistant, heat resistant and are low in cost. Phenolic polymers are typically formulated by blending phenol and less than a stoichiometric amount of formaldehyde. These materials are condensed with an acid catalyst resulting in a thermoplastic intermediate polymer called NOVOLAK. These polymers are oligomeric species terminated by phenolic groups. In the presence of a curing agent and optional heat, the oligomeric species cure to form a very high molecular weight thermoset polymer. Curing agents for novalaks are typically aldehyde compounds or methylene ($-CH_2-$) donors. Aldehydic curing agents include paraformaldehyde, hexamethylenetetramine, formaldehyde, propionaldehyde, glyoxal and hexamethylmethoxy melamine.

The fluorocarbon polymers useful in this invention are perflourinated and partially fluorinated polymers made with monomers containing one or more atoms of fluorine, or copolymers of two or more of such monomers. Common examples of fluorinated monomers useful in these polymers or copolymers include tetrafluoroethylene (TFE), hexafluoropropylene(HFP), vinylidene fluoride (VDF), perfluoroalkylvinyl ethers such as perfluoro-(n-propyl-vinyl) ether (PPVE) or perfluoromethylvinylether (PMVE). Other copolymerizable olefinic monomers, including non-fluorinated monomers, may also be present.

Particularly useful materials for the fluorocarbon polymers are TFE-HFP-VDF terpolymers (melting temperature of about 100 to 260°C.; melt flow index at 265°C. under a 5 kg load is about 1-30 g-10 $min^{-1}$.), hexafluoropropylene-tetrafluoroethylene-ethylene (HTE) terpolymers (melting temperature about 150 to 280°C.; melt flow index at 297°C. under a 5 kg load of about 1-30 g-10 $min^{-1}$.), ethylene-tetrafluoroethylene (ETFE) copolymers (melting temperature about 250 to 275°C.; melt flow index at 297°C. under a 5 kg load of about 1-30 g-10 $min^{-1}$.), hexafluoropropylene-tetrafluoroethylene (FEP) copolymers (melting temperature about 250 to 275°C.; melt flow index at 372°C. under a 5 kg load of about 1-30 g-10 $min^{-1}$.), and tetrafluoroethylene-perfluoro(alkoxy alkane) (PFA) copolymers (melting temperature about 300 to 320°C.; melt flow index at 372°C. under a 5 kg load of about 1-30 g-10 $min^{-1}$.). Each of these fluoropolymers is commercially available from Dyneon LLC, Oakdale, Minn. The TFE-HFP-VDF terpolymers are sold under the designation "THV".

Also useful are vinylidene fluoride polymers primarily made up of monomers of vinylidene fluoride, including both homo polymers and copolymers. Such copolymers include those containing at least 50 mole percent of vinylidene fluoride copolymerized with at least one comonomer selected from the group consisting of tetrafluoroethylene, trifluoroethylene, chlorotrifluoroethylene, hexafluoropropene, vinyl fluoride, pentafluoropropene, and any other monomer that readily copolymerizes with vinylidene fluoride. These materials are further described in U.S. Patent No. 4,569,978 (Barber). Preferred copolymers are those composed of from at least about 70 and up to 99 mole percent vinylidene fluoride, and correspondingly from about 1 to 30 percent tetrafluoroethylene, such as disclosed in British Patent No. 827,308; and about 70 to 99 percent vinylidene fluoride and 1 to 30 percent hexafluoropropene (see for example U.S. Patent No. 3,178,399); and about 70 to 99 mole percent vinylidene fluoride and 1 to 30 percent trifluoroethylene. Terpolymers of vinylidene fluoride, trifluoroethylene and tetrafluoroethylene such as described in U.S. Patent No. 2,968,649 and terpolymers of vinylidene fluoride, trifluoroethylene and tetrafluoroethylene are also representative of the class of vinylidene fluoride copolymers which are useful in this invention. Such materials are commercially available under the KYNAR trademark from Arkema Group located in King of Prussia, PA or under the DYNEON trademark from Dyneon LLC of Oakdale, MN.

Fluorocarbon elastomer materials can also be used in the composite materials of the invention. Fluorocarbon elastomers contain $VF_2$ and HFP monomers and optionally TFE and have a density greater than 1.8 $gm\text{-}cm^{-3}$ ; these polymers exhibit good resistance to most oils, chemicals, solvents, and halogenated hydrocarbons, and excellent resistance to ozone, oxygen, and weathering. Their useful application temperature range is -40°C to 300°C. Fluorocarbon elastomer examples include those described in detail in Lentz, U.S. Pat. No. 4,257,699, as well as those described in Eddy et al., U.S. Pat. No. 5,017,432 and Ferguson et al., U.S. Pat. No. 5,061,965.

Latex fluorocarbon polymers are available in the form of the polymers comprising the PFA, FEP, ETFE, HTE, THV and PVDF monomers. Fluorinated poly(meth)acrylates can generally be prepared by free radical polymerization either neat or in solvent, using radical initiators well known to those skilled in the art. Other monomers which can be copolymerized with these fluorinated (meth)acrylate monomers include alkyl (meth)acrylates, substituted alkyl (meth)acrylates, (meth)acrylic acid, (meth)acrylamides, styrenes, vinyl halides, and vinyl esters. The fluorocarbon polymers can comprise polar constituents. Such polar groups or polar group containing monomers may be anionic, nonionic, cationic, or amphoteric. In general, the more commonly employed polar groups or polar group-containing organic radicals include organic acids, particularly carboxylic acid, sulfonic acid and phosphonic acid; carboxylate salts, sulfonates, phosphonates, phosphate esters, ammonium salts, amines, amides, alkyl amides, alkyl aryl amides, imides, sulfonamides, hydroxymethyl, thiols, esters, silanes, and polyoxyalkylenes, as well as other organic radicals such as alkylene or arylene substituted with one or more of such polar groups. The latex fluorocarbon polymers described herein are typically aqueous dispersed solids but solvent materials can be used. The fluorocarbon polymer can combined with various solvents to form emulsion, solution or dispersion in a liquid form. Dispersions of fluoropolymers can be prepared using conventional emulsion polymerization techniques, such as described in U.S. Pat. Nos. 4,418,186; 5,214,106; 5,639,838; 5,696,216 or Modern Fluoropolymers, Edited by John Scheirs, 1997 (particularly pp. 71-101 and 597-614).

The liquid forms can be further diluted in order to deliver the desired concentration. Although aqueous emulsions, solutions, and dispersions are preferred, up to about 50% of a cosolvent such as methanol, isopropanol, or methyl perfluorobutyl ether may be added. Preferably, the aqueous emulsions, solutions, and dispersions comprise less than about 30% cosolvent, more preferably less than about 10% cosolvent, and most preferably the aqueous emulsions, solutions, and dispersions are substantially free of cosolvent.

Interfacial modifiers provide the close association of the particle with the polymer. Interfacial modifiers used in the non-reactive or non-crosslinking application fall into broad categories including, for example, stearic acid derivatives, titanate compounds, zirconate compounds, phosphonate compounds, aluminate compounds. Aluminates, phosphonates, titanates and zirconates useful contain from about 1 to about 3 ligands comprising hydrocarbyl phosphate esters and/or hydrocarbyl sulfonate esters and about 1 to 3 hydrocarbyl ligands which may further contain unsaturation and heteroatoms such as oxygen, nitrogen and sulfur. Preferably the titanates and zirconates contain from about 2 to about 3 ligands comprising hydrocarbyl phosphate esters and/or hydrocarbyl sulfonate esters, preferably 3 of such ligands and about 1 to 2 hydrocarbyl ligands, preferably 1 hydrocarbyl ligand.

The choice of interfacial modifiers is dictated by particulate, polymer, and application. The particle surface is substantially coated even if having substantial morphology. The coating isolates the polymer form the particle. The maximum density of a composite is a function of the densities of the materials and the volume fractions of each. Higher density composites are achieved by maximizing the per unit volume of the materials with the highest densities. The inorganic materials are extremely hard and difficult to deform, usually resulting in brittle fracture. When compounded with deformable polymeric binders, these brittle materials may be formed into usable shapes using traditional thermoplastic equipment. However, the maximum densities achievable will be less then optimum. When forming composites with polymeric volumes approximately equal to the excluded volume of the filler, inter-particle interaction dominates the behavior of the material. Particles contact one another and the combination of interacting sharp edges, soft surfaces (resulting in gouging, points are usually work hardened) and the friction between the surfaces prevent further or optimal packing. Therefore, maximizing properties is a function of softness of surface, hardness of edges, point size of point (sharpness), surface friction force and pressure on the material, circularity, and the usual, shape size distribution. Because of this inter-particle friction, the forming pressure will decrease exponentially with distance from the applied force. Interfacially modifying chemistries are capable of modifying the surface of the dense filler by coordination bonding, Van der Waals forces, covalent bonding, or a combination of all three. The surface of the particle behaves as a particle the interfacial modifier. These organics reduce the friction between particles preventing gouging and allowing for greater freedom of movement between particles. These phenomenon allow the applied shaping force to reach deeper into the form resulting in a more uniform pressure gradient.

Preferred titanates and zirconates include isopropyl tri(dioctyl)pyrophosphato titanate (available from Kenrich Chemicals under the designation KR38S), Commercial titanates Kr-238J and KR-9S, neopentyl(diallyl)oxy, tri(dodecyl)benzene-sulfonyl titanate (available from Kenrich Chemicals under the trademark and designation LICA 09), neopentyl(diallyl)oxy, trioctylphosphato titanate (available from Kenrich Chemicals under the trademark and designation LICA 12), neopentyl(diallyl)oxy, tri(dodecyl)benzene-sulfonyl zirconate (available from Kenrich Chemicals under the designation NZ 09), neopentyl(diallyl)oxy, tri(dioctyl)phosphato zirconate (available from Kenrich Chemicals under the designation NZ 12), and neopentyl(diallyl)oxy, tri(dioctyl)pyro-phosphato zirconate (available from Kenrich Chemicals under the designation NZ 38). The most preferred titanate is tri(dodecyl)benzene-sulfonyl titanate (available from Kenrich Chemicals under the designation LICA 09). The interfacial modifiers modify the particulate in the composites of the invention with the formation of a layer on the surface of the particle reducing the intermolecular forces, improving the tendency of the polymer mix with the particle, and resulting in increased composite density. Density is maximized as the number of close associations between the particulate surface and polymer is maximized.

Thermosetting polymers can be used in an uncured form to make the composites with the interfacial modifiers. Once the composite is formed the reactive materials can chemically bond the polymer phase if a thermoset polymer is selected. The reactive groups in the thermoset can include methacrylyl, styryl, or other unsaturated or organic materials.

Thermoplastics include polyvinylchloride, polyphenylene sulfite, acrylic homopolymers, maleic anhydride containing polymers, acrylic materials, vinyl acetate polymers, diene containing copolymers such as 1,3-butadiene, 1,4-pentadiene, halogen or chlorosulfonyl modified polymers or other polymers that can react with the composite systems of the invention. Condensation polymeric thermoplastics can be used including polyamides, polyesters, polycarbonates, polysulfones and similar polymer materials by reacting end groups with silanes having aminoalkyl, chloroalkyl, isocyanato or similar functional groups.

The manufacture of the particulate composite materials depends on good manufacturing technique. Often the particulate is initially treated with an interfacial modifier by spraying the particulate with a 25 wt-% solution of interfacial modifier on the particle with blending and drying carefully to ensure uniform particulate coating. interfacial modifier can also be added to particles in bulk blending operations using high intensity Littleford or Henschel blenders. Alternatively, twin cone mixers can be followed by drying or direct addition to a screw compounding device. Interfacial modifiers may also be combined with the particulate in aprotic solvent such as toluene, tetrahydrofuran, mineral spirits or other such known solvents.

The particulate can be interfacially combined into the polymer phase depending on the nature of the polymer phase, the filler, the particulate surface chemistry and any pigment process aid or additive present in the composite material. In general, the mechanism used to couple particulate to polymer include solvation, chelation, coordination bonding (ligand formation), etc. Typically, however, covalent bonds, linking the particle or interfacial modifier, and the polymer is not formed. Titanate, phosphonate or zirconate agents can be used. Such agents have the following formula:

$$(RO)_m\text{-Ti-}(O\text{-}X\text{-}R'\text{-}Y)_n$$

$$(RO)_m\text{-Zr-}(O\text{-}X\text{-}R'\text{-}Y)_n$$

$$(R0)_m\text{-P-}(O\text{-}X\text{-}R'\text{-}Y)_n$$

wherein R and R' are independently a hydrocarbyl, $C_{1-12}$ alkyl group or a $C_{7-20}$ alkyl or alkaryl group wherein the alkyl or alkaryl groups may optionally contain one or more oxygen atoms or unsaturation; X is sulfate or phosphate; Y is H or any common substituent for alkyl or aryl groups; m and n are 1 to 3. Titanates provide antioxidant properties and can modify or control cure chemistry. Zirconate provides excellent bond strength but maximizes curing, reduces formation of off color in formulated thermoplastic materials. A useful zirconate material is neopentyl(diallyl) oxy-tri (dioctyl) phosphato-zirconate.

The composite materials having the desired physical properties can be manufactured as follows. In a preferred mode, the surface coating of the particulate is initially prepared. The interfacial modifier is combined with the prepared particle material, and the resulting product is isolated and then combined with the continuous polymer phase to affect an interfacial association between the particulate and the polymer. In the composite the coating is less than 1 μm thick and isolates the polymer form the particle. The polymer "sees" only the coating. Once the composite material is prepared, it is then formed into the desired shape of the end use material. Solution processing is an alternative that provides solvent recovery during materials processing. The materials can also be dry-blended without solvent. Blending systems such as ribbon blenders obtained from Drais Systems, high density drive blenders available from Littleford Brothers and Henschel are possible. Further melt blending using Banberry, veferralle single screw or twin screw compounders is also useful. When the materials are processed as a plastisol or organosol with solvent, liquid ingredients are generally charged to a processing unit first, followed by polymer, particulate and rapid agitation. Once all materials are added a vacuum can be applied to remove residual air and solvent, and mixing is continued until the product is uniform and high in density.

Dry blending is generally preferred due to advantages in cost. However certain embodiments can be compositionally unstable due to differences in particle size. In dry blending processes, the composite can be made by first introducing the polymer, combining the polymer stabilizers, if necessary, at a temperature from about ambient to about 60°C with the polymer, blending a particulate (modified if necessary) with the stabilized polymer, blending other process aids, interfacial modifier, colorants, indicators or lubricants followed by mixing in hot mix, transfer to storage, packaging or end use manufacture.

Interfacially modified materials can be made with solvent techniques that use an effective amount of solvent to initiate formation of a composite. When interfacial treatment is substantially complete, the solvent can be stripped. Such solvent processes are conducted as follows:

1) Solvating the interfacial modifier or polymer or both;
2) Mixing the particulate into a bulk phase or polymer master batch: and
3) Devolatilizing the composition in the presence of heat and vacuum above the Tg of the polymer.

When compounding with twin screw compounders or extruders, a preferred process can be used involving twin screw compounding as follows.

1. Add particulate and raise temperature to remove surface water (barrel 1).
2. Add interfacial modifier to twin screw when filler is at temperature (barrel 3).
3. Disperse/distribute surface chemical treatment on particulate.
4. Maintain temperature to completion.
5. Vent by-products (barrel 6).
6. Add polymer binder (barrel 7).
7. Compress/melt polymer binder.
8. Disperse/distribute polymer binder in particulate.
9. Form surface modified particulate with polymer binder.
10. Vacuum degas remaining products (barrel 9).
11. Compress resulting composite.
12. Form desired shape, pellet, lineal, tube, injection mold article, etc. through a die or post-manufacturing step.

Alternatively in formulations containing small volumes of continuous phase:

1. Add polymer binder.
2. Add interfacial modifier to twin screw when polymer binder is at temperature.
3. Disperse/distribute interfacial modifier in polymer binder.
4. Add filler and disperse/distribute particulate.
5. Raise temperature to effective coating temperature.
6. Maintain temperature to completion.
7. Compress resulting composite.
8. Form desired shape, pellet, lineal, tube, injection mold article, etc. through a die or post-manufacturing step.

Certain selections of polymers and particulates may permit the omission of the interfacial modifier and their related processing steps.

## Experimental section

THV220A (Dyneon Polymers, Oakdale MN) is a polymer of tetrafluoroethylene, hexafluoropropylene, and vinylidene fluoride. The material is intended for extrusion applications, has a melting point of 120 °C and a specific gravity of 1.9 g/cc.

NZ 12 is neopentyl(diallyl)oxy-tri(dioctyl)phosphato-zirconate. It is available from KenRich Petrochemicals (Bayonne, NJ). NZ12 has a specific gravity of 1.06 g/cc and is readily soluble in isopropyl alcohol (IPA).

### Methods and Procedures

Powder Characterizations:

Powder characterization is completed to determine packing behavior of the powdered materials. Packing fraction is determined by dividing the packing density of the powder by the true density as determined via helium pycnometry. Packing fraction is defined as:

$$P_f = P_d/d_{pync}$$

wherein $P_f$ = packing fraction; $P_d$ = packing density and $d_{pync}$ = pyncnometer density.

Packing density is determined by measuring the bulk powder weight within a volume. The packing density is commonly determined by placing the powder within a metallurgical press. The press setup is available from Buehler International (Lake Bluff, IL). For frangible materials, pressure is reduced to the appropriate level to reduce breakage of the powder particles thereby preventing artificially high packing density values. For very frangible materials, a tap density is used. The pycnometer density is determined by helium gas pycnometry (AccuPync 1330 manufactured by Micromeretics Corporation - Norcross, GA).

Application of Interfacial Modifier:

To interfacially modify particles at a lab scale, the interfacial modifier is first solubilized with IPA. The IPA/modifier mixture is applied to the powdered material previously placed within a rotating stainless steel rotating cooking stock pot. The 3 gallon (11.4 L) stainless steel cooking pot was coupled to a DC drive and motor for controlled rotation with the pot orientated at 30 degrees from horizontal. The IPA/modifier mixture is added along with additional IPA in enough volume to fully wet and flood the particles. The outer part of the pot is then heated externally with an industrial heat gun to volatize the IPA. After a sufficient time, the modified particles become free flowing - an indication that they are ready for compounding within our laboratory twin screw compounding equipment.

Compounding:

The polymer and modified particles are fed in appropriate ratios using K-tron K20 gravimetric weight loss feeders. The raw ingredients are fused together within a 19mm B&P twin screw compounder. Barrel zone temperatures (5), screw speed, volumetric throughput, and die characteristics (number of openings and opening diameter) are varied depending on the nature of the particles and polymers being compounded. Commonly, torque, pressure, and melt temperature are monitored responses. A useful way to ensure the proper ratio of polymer and particulate(s) is to place compounded pellets into the heated metallurgical press; we call this the "puck density".

Extrusion:

The compounded products are extruded using 1" (2.54 cm) diameter extruder (Al-Be Industries, Fullerton, CA). Temperatures and volumetric throughput vary depending on the rheological behavior of the materials being extruded. Typically, motor amp load and extrusion pressures are monitored responses and used to gauge ease of extrudability. For samples requiring characterization of tensile properties, the materials are extruded through a 19mm x 3 mm rectangular die plate onto a moving belt to minimize extrudate draw-down.

Tensile and Elongation:

ASTM Type IV dogbones were die cut from the extruded strips. The dog-bones were then tensile tested using a Lloyd Instruments universal testing machine produced by Ametek, Inc. A one-inch (2.54 cm) gauge length was used in the strain calculations. The cross-head speed was varied in an attempt to meet ASTM standards of tensile test duration lasting between 30 seconds and 3 minutes. A stress/strain curve was generated for the test samples.

**Example 1**

**Silica Sand**

Silica sand was obtained from Sterling Supply Inc., Minneapolis, MN (1-50 lb (22.7 kg) bag stock #5030). NZ12 coated and uncoated silica sand possessing an average particle size of 180 μm) was compounded into THV 220A.

Before compounding or coating, the pycnometer and press densities were measured to calculate the packing fraction of silica sand. The helium pycnometer density was found to be 2.65 g/cc. The silica sand was pressed to a load of 10000 lbf ram pressure (8200 psi; 56.5 MPa) and pumped and released 30 times.

**Table 2 - Density of silica sand using various test methods.**

| Description | Density [g/cc] |
|---|---|
| Pycnometer | 2.6503 |
| 8200 psi (56.5 MPa) | 2.004 |

(packing fraction = 2.00/2.65 = 75.5%)

Silica sand was coated with 2 pph Kenrich NZ12 and compounded into Dyneon THV 220A to form the test composite. The coated sand was analyzed with the lab pycnometer to determine the coated density which was found to be 2.56 g/cc. The target packing in the composite was set at 60 vol% silica sand. The 60 vol% particle was maintained for the coated and uncoated materials with the understanding that the NZ12 is a part of the continuous polymer phase not the particle phase.

Both coated and uncoated materials were compounded using the lab 19mm twin screw extruder using a temperature profile of 185 °C in all five zones and a 19 hole die; screw speed was kept constant at 185 RPM. Both materials were fed into the compounder with KTron gravimetric twin screw feeders. The total material throughput rate was maintained at 60 cc/min. Torque was lower for the interfacially modified material (40% vs 55-60% for the unmodified). Both materials were cut into pellets at the die face with the lab compounder four blade pellet cutter and air cooled. For both materials the pellets stuck together some, indicating that the 60 volume % particulate phase was not at the maximum possible particle loading.

Both materials were then extruded using a flat temperature profile of 150 °C and a constant screw speed of 40 RPM. The unmodified material extruded with a melt pressure of 1300-1700 psi (8.96-11.7 MPa) and a motor load of 4.5-5.4 amps. The modified material ran fine with a melt pressure of 1350-1500 psi (9.31-10.3 MPa) and a motor load of 5.8 amps ± 0.2 amps.

Four ASTM 638 type four dog bones were cut from the extruded strips of each material. Each sample was tested with a constant extension rate of one inch per minute and the force required was recorded. Table 3 and Figure 2 summarizes the tensile properties and composition of the materials created in this experiment and also provides previous data on pure THV 220A as a comparison. The unmodified samples underwent relative brittle fracture compared to the modified which experienced significant elongation before fracture. Tensile properties were drastically different with the unmodified yield strength much higher (5.4 MPa vs 0.7 MPa) and the elongation was much higher for the modified material (600 % at break vs 20 % at break).

**TABLE 3**

| Summary of Tensile Properties of Silica Sand Materials Compared to Pure THV 220A<br>Sample | Composition | | |
|---|---|---|---|
| **Example-** | 1a | 1b | 1c |
| **wt% THV 220A [1.9 g/cc]** | 100.0% | 31.8% | 29.8% |
| **wt% Silica [2.65 g/cc]** | 0.0% | 68.5% | 68.7% |
| **wt% Coating** | 0.0% | 0.0% | 1.5% |
| | | | |
| **vol% THV 220A [1.9 g/cc]** | 100.0% | 39.1% | 36.1% |
| **vol% Silica [2.65 g/cc]** | 0.0% | 60.9% | 60.5% |
| **vol% Coating** | 0.0% | 0.0% | 3.4% |
| | | | |
| **Puck Density [g/cc]** | 1.9 | 2.36 | 2.32 |
| **Calculated Target Density [g/cc]** | 1.9 | 2.35 | 2.32 |
| **Deviation from Target** | 0.00% | 0.29% | 0.07% |
| **Physical properties of extruded 3x20mm strip ASTM 638-4 dog bones** | | | |
| **Tensile Stress at Yield [Mpa]** | 3.0 | 5.4 | 0.6 |
| **% Elongation at Yield** | 55 | 9 | 12 |
| | | | |
| **Maximum Tensile Stress [Mpa]** | 10.2 | 5.4 | 1.8 |
| **% Elongation at Break (Max)** | 1005 | 21 | 595 |

**Example 2**

**Zirconium Silicate**

We obtained the zirconium silicate (ZS) spheres in the 70-125 μm size range (product name ZS B0.07) from Stanford Materials (CA). The uncoated helium pycnometer density of the zirconium silicate was determined to be 3.78 g/cc. Packing density using the metallurgical press was determined to be 2.42 g/cc yielding a packing fraction of 64.1% for the unmodified and 2.53 g/cc and 69.2% for particulates modified with 2 phr NZ-12 (the pycnometer result for the modified zirconium silicate was 3.657 g/cc). The results indicate that the interfacial modifier increases the ability to increase packing of the zirconium silicate spheres.

Unmodified ZS-B0.07 was compounded with THV 220A using the 19mm B&P laboratory compounder at a target loading of 60 volume %. The compounder was equipped with a 3 hole die and was using the 4 blade pellet cutter at 100 RPM. At a set compounder screw speed of 185 RPM with a flat 185 °C temperature profile, the compounder exhibited torque of 30-35% of max, pressure of 80-110 psi (0.55-0.76 MPa) and a melt temperature of 200 °C. A puck of the compounded pellets had a density of 3.03 g/cc which was within 2% of the target density.

Interfacially modified ZS was also compounded with THV 220A also at a target loading of 60 volume % zirconium silicate. To maintain a 60.1 vol% particles (treating the ZS as the particle and the coating layer and the THV as the continuous matrix phase in the composite) a mass ratio of 23.2wt% THV and 76.8wt% coated ZS was used. A metallurgical press of the compounded pellets produced a puck with a density of 2.965 g/cc which was within 2% of the target density.

Both materials were extruded at temperature profile of 154, 150, 150, 140 °C from throat to die but motor load was not recorded for either run due to attention on feed and extrudate using a 19 mm x 3 mm rectangular shaped die plate. The finish was good for both materials, no noticeable difference, but the flexibility of the materials was obvious when a section was bent. The modified material was flexible where as the unmodified material was brittle.

Tensile samples were cut then pulled at one inch per minute using the tensile tester. Figure 3 shows the average tensile response of the coated and uncoated materials compared to pure THV 220A. Stress/strain curves were determined using type-IV dogbones with brittle (uncoated) and elastic (when coated at 2 phr of NZ-12) behavior observed.

Because the physical properties (tensile stress/stain curves) and processing within compounding and extrusion were favorable when loading THV220 to about 60 volume % zirconium silicate, we proceeded with a process study to confirm the metallurgical press results that reveal the ability to pack the coated zirconium silicate to a higher level than the uncoated material.

2nd Experiment: Determining Maximum Packing Level with the 19mm Compounder:

Throughout the experiments, the volumetric output was kept constant at 60cc/min with a flat temperature profile of 185°C and a screw speed of 185 RPM and a three hole pellet die plate. Tables 4 and 5 show data for composites with unmodified and modified particle.

**TABLE 4**

| Uncoated | | | |
|---|---|---|---|
| **Vol. % Z.Silicate** | **Torque (%)** | **Pressure (psi)** | **Melt T (°C)** |
| 0 (all THV) | 25 | 0 | 195 |
| 60 | 40-45 | 210 [1.45 MPa] | 204 |
| 64 | 50 | 430 [2.96 MPa] | 208 |
| 68 | 65 | 750-810 [5.17-5.58 MPa] | 224 |
| 70 | 65 | 900 [6.21 MPa] | 235 |
| 72 | Overload | - | - |
| 70 (replicate)* | 75 - 80 | 1070 [7.38 MPa] | 242 |
| 71* | 95 | 1270 [8.76 MPa] | 250 |
| *Note, gathered strands and determined puck density of 3.05 g/cc vs a 3.26 composite density that would correlate to 70%. This value indicates that the composite is starved of polymer resulting in voids within the composite. | | | |

**TABLE 5**

| Coated with 2% NZ-12 | | | |
|---|---|---|---|
| **Vol. % Zr Silicate** | **Torque (%)** | **Pressure (psi)** | **Melt T (°C)** |
| 70 | 40 | 400 ± 50 [2.76 ± 0.34 MPa] | 211 |
| 72 | 60 | 400 ±-50 [2.76 ± 0.34 MPa] | 230 |
| 74 | 60 | 300 [2.07 MPa] | 229 |
| 77 | 50 | 220 [1.52 MPa] | 222 |

Note the reduced torque and pressures associated with the modified material run at a given volumetric level (e.g. 70 volume %). Processing at a higher packing indicated a lower particle : particle friction level in the modified particles; a puck density of the combined levels (70 - 77 volume %) was 2.96 g/cc. The results indicate that the composite samples were polymer starved at particulate levels beyond the packing fraction ( a trend that explains the lower torque and pressures as zirconium silicate levels increased).

**Example 3**

**Aluminosilicate**

G200 aluminosilicate garnet spheres were obtained from 3M Corporation (St. Paul, MN). The solid beads were interfacially modified with NZ12.
Batches of 500 grams of beads were prepared in the stock pot with a loading of 2 wt% NZ12. The 2wt% refers to 2% of the weight of the material to be modified so in this case 10 grams of NZ12 were used resulting in a coated product that was 98.04wt% beads and 1.96wt% modifier. The NZ12 was first dissolved in excess isopropanol (IPA). The IPA/NZ12 solution was added to the beads. Additional IPA was used to rinse the IPA/NZ12 solution container to ensure that all NZ12 was added to the beads. Further IPA was added as needed to achieve a slurry in the stock pot. In total, approximately 1000 ml of IPA was added to the 500 grams of G200 microspheres. The stock pot was heated until the IPA was volatilized and the spheres returned to a dry flowable powder.
Next, the modified beads were compounded into THV 220A. Samples of both the modified and unmodified beads were analyzed with the Accupyc 1330 Pycnometer to determine their density. Using the densities of NZ12 (1.06 g/cc), uncoated beads (2.66 g/cc), and THV 220A (1.9 g/cc) weight based feed rates were calculated for each loading level. Unmodified and interfacially modified beads were compounded into THV 220A at 20vol%, 40vol%, 45vol% and 51.7 vol% of beads in the final composite. All samples were compounded on 19mm compounder with a 3 hole die and a rotating 4 blade pellet cutter onto a moving conveyer belt with ambient air cooling. All samples were compounded with the same temperature profile of 185 °C in every zone. Pellets needed were shaken in the collection bucket as they cooled so they would not stick together. All samples compounded fine, never torqued out the compounder (torque values ranged from 20% at low loading to 40% at high loading) but the pressure was getting higher with the 51.7vol% samples. Holes in the 3 hole die would periodically plug and then clear on their own resulting in back pressures ranging from 180-230psi (1.24-1.59 MPa) for the NZ12 modified sample and 160-240psi (1.10-1.65 MPa) for the unmodified sample. Higher loading samples were rougher and the ceramic powder was visible where as at the lower loading, samples were smoother and evenly colored. The 19 hole die was used initially for the 20vol% sample but the pellets stuck together as they were cut so the 3 hole die was used instead.
The 20%, 45%, and 51.7 volume % samples were extruded on the 1 inch single screw extruder equipped with a pressure gauge using a 19mm x 3 mm die plate assembly. The same temperature profile of (154, 150, 150, 140 °C from throat to die) was used for all samples except the 20 vol% loading which used (180, 150, 150, 140 °C from throat to die). The 40 volume% samples were extruded on the extruder with no pressure gage. All samples extruded fine, low loading had slight die swell. Samples extruded on the non-pressure gage extruder had slightly rough finish which looked to be from bubbling in the material.
ASTM 638 type 4 dog bones were cut from extruded strips of each sample. Tension testing was performed on the tensile tester. A 1 inch gage length (2.54 cm) was used per the ASTM standard and a rate of 1 inch/min (2.54 cm/min) was used for each sample group. Two to four samples were tested for each sample group. Samples of extruded THV 220A were also tested. Figure 4 and the table below summarize the results of the tensile testing. Yield stresses were taken to be the first peak in the plot or, when none was present, the point where the curve started to "bend over" as determined approximately by observation of plotted data. For the high loading composite samples containing modified particles, ductile failure was observed where the material tore slowly (over a few seconds) and failed. Composite samples containing unmodified particles failed in a more brittle fashion (no tearing). The samples of pure THV 220A and the 20vol% loading samples did not fail and extended to the maximum of the machine.

Figure5 below shows the average tension and elongation curves for each composite sample made. Since the tension testing was performed with constant rate of extension, the average curves were generated by averaging the stress for each sample at a given extension. Figure 5 shows just the lower extension of the two inch (5.08 cm) extension region of Figure 4.

Table 7 below outlines the relevant parameters and properties of each sample in this experiment.

Table 6

| Sample | | | | | | | Composition | | |
|---|---|---|---|---|---|---|---|---|---|
| Example | 3a | 3b | 3c | 3d | 3e | 3f | 3g | 3h | 3i |
| wt% THV 220A | 100 | 74.0 | 73.5 | 51.7 | 50.3 | 47.0 | 45.0 | 40.0 | 38.0 |
| wt% G-200 | 0 | 26.0 | 26.0 | 48.3 | 48.8 | 53.0 | 53.9 | 60.0 | 60.8 |
| wt% NZ12 | 0 | 3.0 | 0.5 | 0.0 | 0.9 | p.o | 1.1 | 0.0 | 1.2 |
| | | | | | | | | | |
| vol% THV 220A | 100 | 80 | 79 | 60 | 58.0 | 55.4 | 52.5 | 48.3 | 45.3 |
| vol% G-200 | 0 | 20 | 20 | 40 | 40.2 | 44.6 | 44.9 | 51.7 | 51.7 |
| vol% NZ12 | 0 | 0 | 1.0 | 0 | 1.8 | 0 | 2.6 | 0 | 3.0 |
| | | | | | | | | | |
| Density THV 220A [1.9g/cc] | 1.9 | 1.9 | 1.9 | 1.9 | 1.9 | 1.9 | 1.9 | 1.9 | 1.9 |
| Density G-200 [2.66g/ce] | 2.66 | 2.66 | 2.66 | 2.66 | 2.66 | 2.66 | 2.66 | 2.66 | 2.66 |
| | | | | | | | | | |
| Puck Density [g/cc] | 1.9 | 2.04 | 2.01 | 2.19 | 2.17 | 2.22 | 2.19 | 2.23 | 2.25 |
| Calculated Target Density | 1.9 | 2.05 | 2.04 | 2.21 | 2.19 | 2.24 | 2.24 | 2.29 | 2.26 |
| Deviation from Target | 0.00% | 0.61% | 1.43% | 0.68% | 0.64% | 0.89% | 2.23% | 2.79% | 0.44% |
| Physical properties of extruded 3x20 mm strip ASTM 638-4 dogbones | | | | | | | | | |
| Tensile Stress at Yield [Mpa] | 3.0 | 5.2 | 4.5 | 4.0 | 4.5 | 3.6 | 3.9 | 3.0 | 4.9 |
| Elongation at Yield [%] | 55 | 68 | 57 | 25 | 13 | 2 | 9 | 4 | 8 |
| | | | | | | | | | |
| Tensile Stress at Break [Mpa] | 10.2 | 12.6 | 11.6 | 7.8 | 2.7 | 7.8 | 0.3 | 7.7 | 0.2 |
| Elongation at Break [%] | 1000 | 980 | 1040 | 60 | 320 | 30 | 50 | 20 | 30 |

## Example 4

### Garnet

Garnet was obtained from Barton Garnet (Lake George, NY); 60 mesh (0.25 mm) and 350 mesh (43 μm). The Garnet was fully evaluated starting with fundamental powder properties through interfacial modification, compounding, and two end processes (extrusion and melt molding).

### Unmodified Powder

The particle size distribution of each sample product was determined using ASTM stacked sieves and a roto-tap sifter. The garnet packing fractions were characterized using a ratio of press density (via metallurgical press) to that of true density (via the helium pycnometer). Each of the two sizes were evaluated along with a blend of 3 : 1 by weight of the 60 mesh (0.25 mm) to the 350 mesh (43 μm). The tap density was also determined using a Quanta-Chrome Dual Autotap instrument set to 1000 tap cycles.

Interfacially Modified Powder

The packing fraction of the 3:1 ratio of large (60 mesh; 0.25 mm) to fine (350 mesh; 43 μm) garnet blend was determined after modifying the particles with 1.5 parts of NZ-12 per 100 parts of garnet using the ratio of packing density (via metallurgical press) to that of true density (via pyncometer).

Compounding with Fluorocarbon Polymer and Ethylene Vinyl Acetate

The garnet (both modified and unmodified) was compounded with THV 220A at volumetric loadings starting at 60 volume % and increasing in increments of 4 volume % until over-torque occurred. A constant volumetric output of 100 $cm^3$-$min^{-1}$ was maintained throughout. The following compounder settings were used:

- Flat temperature profile for all 5 zones at 185 °C.
- Screw speed = 250 rpm
- 19 hole die plate with rotating cutter and conveyor belt

The blended garnet was also compounded/extruded into 1 inch (2.54 cm) diameter glue sticks using the 19 mm twin screw compounder and HB Fuller's (St. Paul, MN) HL7268 EVA based product. A volume fraction of 70% was targeted with a desired volumetric output of 100 cc/min. The following compounder settings were used: Zone 1 to 5: 80°C : 80°C; 80°C; 80°C : 75°C : no additional heat from heater band Screw speed = 120 rpm (we decreased RPM until an increase in torque occurred) with 1 inch (2.54 cm) pipe die.

The material had excessive droop as it was conveyed onto a belt. As a result, the rough sticks were fed into a Wiley Mill and ground. The ground material was pressed (at room temperature) into a 1 inch (2.54 cm) diameter rod using the metallurgical press. A sole melt molding stick was made and used for the melt molding work described below.

Extrusion

Extrusion: The garnet/THV pellets were fed into a single screw extruder with barrel temperatures maintained at 160°C : 160°C : 150°C : 140°C (zone-1, zone-2, zone-3, Die). Strips were extruded using a 3X19 mm die. Screw speed was maintained between 20 and 27 rpm.

Tensile and Elongation

ASTM type-IV dog bones were cut from the THV based extruded strips. An attempt was made to maintain reasonable tensile test duration by varying the cross-head speed (i.e. a faster cross head speed was used for the relatively elastic samples while a slower rate was used for the non-elastic samples).

RESULTS:

The garnet packing fractions of the 60 and 350 mesh (0.25 mm and 43 μm respectively) sizes were evaluated along with a blend of 3 : 1 by weight of the 60 mesh to the 350 mesh (0.25 mm and 43 μm respectively).

**Table 7**

| | press density (g/cc) | true density (g/cc) | packing fraction (vol%) |
|---|---|---|---|
| 60HPA | 3.054 | 4.084 | 74.8% |
| 350W | 2.391 | 3.916 | 61.1% |
| 3:1 Blend | 3.115 | 4.050 | 76.9% |

The tap density of the blended mix was 2.906 g/cc (71.8%). The tap density may more accurately reflect attainable packing levels in low pressure application processes like melt molding.

The packing fraction of the 3:1 ratio of large (60 mesh; 0.25 mm) to fine (350 mesh; 43 μm) garnet blend modified with 1.5 wt% NZ12 possessed a packing fraction of 82.2% (press density of 3.191 g-$cm^{-3}$ and a corresponding pycnometer density of 3.884 g-$cm^{-3}$). The increased packing behavior is similar to trends observed after modifying other particles.

The garnet (both modified and unmodified) was compounded into THV 220A. Puck densities were obtained and near the intended target values:

**Table 8**

| 3:1 60:350 mesh | Unmodified garnet | | Modified garnet | |
|---|---|---|---|---|
| Volume % | calculated puck density (g/cc) | actual puck density (g/cc) | calculated puck density (g/cc) | actual puck density (g/cc) |
| 60% | 3.19 | 3.17 | 3.16 | 3.12 |
| 64% | Not determined | Not determined | 3.24 | 3.22 |
| 68% | Not determined | Not determined | 3.33 | 3.32 |
| 72% | Could not compound | Could not compound | 3.41 | 3.39 |

In calculating the volumetric percentages, the interfacial modifier is considered part of the continuous/polymer phase and only the volume of the garnet considered the particulate phase. The reduced and improved torque of the compounder and the associated reduced and improved compounder pressures are shown in Figures 6 and 7. The unmodified garnet had increased torque and pressure compared to the more easily compounded interfacially modified garnet. Garnet, when modified with 1.5 parts of NZ-12 per 100 parts of particle exhibited vastly different rheological and viscoelastic properties when compared to an untreated control:

Higher packing fraction was attained and lower compounder torques and pressures occurred.

The blended garnet was also compounded/extruded into 1 inch diameter glue sticks using the 19 mm twin screw compounder and HB Fuller's HL7268 EVA based product.

- ◦ Torque = 50%
- ◦ Melt temperature = 84°C
- ◦ Pressure = 120 psig (827 KPa)

Note that pellets of the EVA composite product could be pressed into a solid stick at room temperature under significant pressures (e.g. a few thousand psi exerted within a metallurgical press). The ground material can be forced into a loose ball using hand pressure, much like wet snow.

Tensile and Elongation data was collected. In short, the modifier effectively increases composite elasticity and elongation at a given garnet particulate loading. The elongation to break decreases as the loading increases whether or not the particles were interfacially modified. Figure 1 shows the relationship of the use of an interfacial modifier on various levels of loading of garnet particles in a fluorocarbon polymer. Without interfacial modifier the material is brittle and fails at minimum elongation. With interfacial modifier the composite has substantial elongation.

The stress strain curves for all populations are shown in Figures 8 through 14. In figures 8-10 at 60 to 68% garnet at 1.5% interfacially modified material, the composite has excellent elongation or extension. The very high packing amounts (Figure 11) or the absence of an interfacially modified particulate (figures 10-14) obtained poor extension.

The composites of the invention can be used in a number of applications that use either the properties of the particulate in the composite or the overall viscoelastic properties of the composite. The viscoelastic materials can be formed into objects using conventional thermoplastic polymer forming techniques including extrusion, injection molding, compression molding, and others. The composites of the invention can be used in many specific applications such as in transportation (including automotive and aerospace applications), abrasive applications used to either remove materials such as paint or corrosion or dirt or stains, uses where high density (6 to 17 g-cm$^{-3}$) or low density (0.2 to 2 g-cm$^{-3}$) is useful, hunting and fishing applications or in mounting applications where a base or mounting weight is needed. Specific applications include fishing lure and jig, abrasive pads with aluminum oxide, silica or garnet used like sand paper or sanding blocks, abrasive pads with cleaning materials used like Scothbright ® pads for cleaning surfaces, brake pads (aluminum oxide or garnet), apex seals for Wankel ® or rotary engines, fuel applications (line, tank or seal), engine or drive train counterweight, automotive or truck wheel weight. The composites of the invention include a particulate and a polymer phase that combine to obtain in the composite valuable properties. These properties include improved thermal properties (both heat sink and insulation character), improved impact resistance, improved hardness, improved frictional or abrasive character, improved barrier properties to the mass transfer of vapor or liquid materials through the composite, improved acoustic insulation properties. The composites obtain these properties form a selection of the particulate and polymer and a selection of particulate loading.

An inorganic composite and polymer composite is made comprising 30 to 87 vol.-% of an inorganic mineral particle having a particle size $P_S$ greater than about 5 $\mu$m having a coating of 0.005 to 5 wt-% of an interfacial modifier, the percentage based on the composite; and a polymer phase. The particle of the composite may comprise a mineral having a particle size $P_S$ of about 10 to 400 $\mu$m, about 15 to 350 $\mu$m or greater than about 10 $\mu$m with a circularity of the mineral about 12.5 to 50 or 13 to 50. In one embodiment particle comprises a silicate mineral having a particle size $P_S$ of about 5 to 150 $\mu$m.

The composite has a tensile strength of about 0.1 to 15 times or about 5 to 25 times that of the base polymer. The composite of claim 1 wherein the composite has a tensile strength of 5 and 100 times that of the base polymer, a tensile elongation of about 5% and 100% or a tensile elongation of about 10% and 100% of the base polymer. In one embodiment, the composite has a tensile strength of about 10 to 20 times that of the base polymer and a tensile elongation of about 15% and 100% of base polymer and the composite has a thermoplastic shear of at least 5 $sec^{-1}$. In another embodiment, the composite has a tensile strength of at least 0.2 MPa and a thermoplastic shear of at least 5 $sec^{-1}$. The composite comprises greater than 30 vol.-% or 50 vol.-% of the inorganic mineral. In the composite, the composite comprises a particulate wherein the majority of the particulates having a particulate size $P_S$ of about 10 to 1000 $\mu$m; and a fluoropolymer phase. The inorganic mineral has a particle size $P_S$ of about 10 to 200 $\mu$m and the composite additionally comprises a second particulate with a particle size $P_S^1$ that differs from the inorganic composite by at least 5 $\mu$m, alternatively, the inorganic mineral has a particle size $P_S$ according to the formula $P_s \leq 2 P_S^1$ or $P_S \geq 0.5 P_S^1$; wherein $P_S$ is the particle size of the inorganic mineral and $P_S^1$ is the particle size of the second particulate. The second particulate comprises a ceramic particulate, a glass microsphere, a solid glass sphere, or a second inorganic composite, a hollow glass sphere having a particle size $P_S$ of about 10 to 300 $\mu$m, a solid glass sphere having a particle size $P_S$ of about 5 to 300 $\mu$m, a silica having a particle size $P_S$ of about 5 to 300 $\mu$m, a silica or silica sand having a particle size $P_S$ of about 75 to 300 $\mu$m. The silica particle can comprise a zirconium silicate. The polymer can comprise a fluoropolymer, a fluoroelastomer, a polyamide, a nylon, a poly (ethylene-co-vinyl acetate), a synthetic rubber, a polyvinyl chloride or other such polymers or mixtures. The particles can have a coating of about 0.01 to 3 wt% of an interfacial modifier based on the composite. The particles have an excluded vol. of about 13 vol.-% to about 70 vol.-%, or about 13 vol.-% to about 60 vol.-%.

A preferred particulate polymer composite comprises a inorganic mineral particle in a polymer phase, the composite comprising 87 to 40 vol.-% of an inorganic mineral particle, having a density greater than 0.10 $gm\text{-}cm^{-3}$ and less than 5 $gm\text{-}cm^{-3}$, a particle size $P_S$ greater than 10 $\mu$m, a circularity greater than 14 and an aspect ratio less than 3; and about 10 to 70 vol.-% of a polymer phase. The particulate comprises a layer comprising about 0.005 to 3 wt.-% of an interfacial modifier. The composite density is about 0.9 to 15 $gm\text{-}cm^{-3}$, about 1 to 5 $gm\text{-}cm^{-3}$ or about 1 to 2 $gm\text{-}cm^{-3}$. A shaped article can be made comprising the composite with about 87 to 48 vol.-% of a particulate having a particle size $P_S$ greater than 10 $\mu$m, and having a particle size $P_S$ distribution having at least 10 wt.-% of a particulate within about 10 to 100 $\mu$m, at least 10 wt.-% of the polymer particulate within about 100 to 500 $\mu$m, a circularity greater than 13 and an aspect ratio less than 1:3; about 13 to 51 vol.-% of a polymer phase.

A method of forming an inorganic and polymer composite material can be used wherein the extrudable mass comprises a polymer phase and a particle phase, the particle phase comprising a coating of an interfacial modifier in an amount of about 0.005 to 5 wt-% of an interfacial modifier or of about 0.01 to 3 wt% of an interfacial modifier based on the composite, the particles comprising a first particle particulate having a circularity of greater than about 15 or 20 and a second substantially round particulate having a circularity of about 12.5 to 15; the second particulate comprising greater than 5 vol.-% of the composite wherein upon extrusion, the shear on the extrudable mass, the wear of an extruder and the extrusion pressure is reduced. In the method, the second substantially round particle is used at a about 13 to 75 vol.-% 30 to 75 vol.% of a particulate phase comprising 5 to 87vol. % or 13 to 87 vol.-% of the composite. Lastly, the particle size $P_S$ of the first particle differs from the second round particle size $P_S$ of the second particle by about 5 $\mu$m or the particle sizes differ such that the first particle size is greater than twice the size or half the size of the second round particle. The presence of the second round particle reduces wear, reduces pressure and reduces shear imposed on the extrudible mass comprising the polymer and particulate. The composite with a substantial loading of particulate, can pose a challenge to the extruder. Any improvement in the processability improves extruder lifetime and product quality.

While the above specification shows an enabling disclosure of the composite technology of the invention, other embodiments of the invention may be made without departing from the scope of the invention. Accordingly, the invention is embodied in the claims hereinafter appended.

## Claims

1. An inorganic composite and polymer composite comprising:

    (a) 30 to 87 vol.-% of an inorganic mineral particle having a particle size $P_S$ greater than 5 $\mu$m having a coating of 0.005 to 5 wt-% of an interfacial modifier, the percentage based on the composite; and
    (b) a polymer phase,

    wherein particle size $P_S$ refers to the major dimension of the inorganic mineral particle.

2. The composite of claim 1 wherein the composite has a tensile strength, as measured by ASTM D638, of 0.1 to 15 times that of the base polymer.

3. The composite of claim 1 wherein the composite has a tensile elongation, as measured by ASTM D638, of 0.10% to 100% of the base polymer.

4. The composite of claim 1 wherein the composite has a tensile strength of 0.10 to 20 times that of the base polymer and a tensile elongation of 15% to 100% of base polymer, wherein the tensile strength and tensile elongation are measured by ASTM D638.

5. The composite of claim 1 wherein the composite comprises greater than 30 vol.-% of the inorganic material.

6. The composite of claim 1 wherein the inorganic mineral has a particle size $P_S$ of 10 to 200 $\mu$m and the composite additionally comprises a second particulate with a particle size $P_S^1$ that differs from the inorganic composite by at least 5 $\mu$m,
    wherein particle size $P_S^1$ refers to the major dimension of the second particulate.

7. The composite of claim 1 wherein the polymer comprises a fluoropolymer.

8. The composite of claim 1 wherein the polymer comprises a high-density polyolefin.

9. The composite of claim 6 wherein the second particle comprises a mixture of particles of differing composition.

10. The composite of claim 1 wherein the polymer is selected from polyethylene, polypropylene, polybutylene, acrylonitrile-butadiene-styrene (ABS), polybutylene copolymers, polyacetyl resins, polyacrylic resins, homopolymers or copolymers comprising vinyl chloride, vinylidene chloride, fluorocarbon copolymers, nylon, phenoxy resins, polyphenylether, polyphenylsulfide materials, polycarbonate materials, chlorinated polyether resins, polyphenylene oxide resins, polyimide resins, thermoplastic urethane elastomers, polyamides, polyamide-imide polymers, polyarylsulfones, polybutylene terephthalate, polybutylene naphthalate, polyetherimides, polyethersulfones, polyethylene terephthalate, thermoplastic polyamides, polyphenylene ether blends, polyphenylene sulfide, polysulfones, thermoplastic polyurethanes, and polyethylene naphthalate.

11. The composite of claim 10 wherein the polymer is selected from polyethylene, polypropylene, a homopolymer comprising vinyl chloride, ABS or nylon.

12. The composite of claim 1 wherein the inorganic mineral particle is selected from mineral carbonates, mineral aluminates, mineral alumo-silicates, mineral oxides, mineral hydroxides, mineral bicarbonates, mineral sulfates, mineral fluorides, mineral phosphates, and mineral alumo-phosphates.

13. The composite of claim 1 wherein the inorganic mineral particle is selected from bauxite (aluminum ore), calcium carbonate, calcium hydroxide, calcium sulfate, cuprous and cupric sulfide, lead oxide, magnesium carbonate, magnesium oxide, magnesium sulfate, magnesium alum compounds, potassium alumo-silicate, potassium borate, potassium carbonate, potassium sulfate, sodium silicate and sodium sulfate.

14. The composite of claim 1 wherein the inorganic mineral particle is a hollow or solid glass sphere.

**Patentansprüche**

1. Anorganischer Verbundstoff und Polymerverbundstoff, umfassend:

   (a) 30 bis 87 Vol.-% von einem anorganischen Mineralteilchen mit einer Teilchengröße $P_S$ größer als 5 μm mit einer Beschichtung von 0,005 bis 5 Gew.-% von einem Grenzflächenmodifizierungsmittel, wobei der Prozentsatz auf dem Verbundstoff basiert; und
   (b) eine Polymerphase,

   wobei sich die Teilchengröße $P_S$ auf die Hauptabmessung des anorganischen Mineralteilchens bezieht.

2. Verbundstoff nach Anspruch 1, wobei der Verbundstoff eine Zugfestigkeit, wie durch ASTM D638 gemessen, von 0,1 bis 15 mal von jener des Basispolymers aufweist.

3. Verbundstoff nach Anspruch 1, wobei der Verbundstoff eine Zugdehnung, wie durch ASTM D638 gemessen, von 0,10% bis 100% des Basispolymers aufweist.

4. Verbundstoff nach Anspruch 1, wobei der Verbundstoff eine Zugfestigkeit von 0,10 bis 20 mal von jener des Basispolymers und eine Zugdehnung von 15% bis 100% des Basispolymers aufweist, wobei die Zugfestigkeit und Zugdehnung durch ASTM D638 gemessen werden.

5. Verbundstoff nach Anspruch 1, wobei der Verbundstoff mehr als 30 Vol.-% von dem anorganischen Material umfasst.

6. Verbundstoff nach Anspruch 1, wobei das anorganische Mineral eine Teilchengröße $P_S$ von 10 bis 200 μm aufweist und der Verbundstoff zusätzlich einen zweiten teilchenförmigen Stoff mit einer Teilchengröße $P_S^1$ umfasst, die sich von dem anorganischen Verbundstoff um mindestens 5 μm unterscheidet,
   wobei sich die Teilchengröße $P_S^1$ auf die Hauptabmessung von dem zweiten teilchenförmigen Stoff bezieht.

7. Verbundstoff nach Anspruch 1, wobei das Polymer ein Fluorpolymer umfasst.

8. Verbundstoff nach Anspruch 1, wobei das Polymer ein Polyolefin mit hoher Dichte umfasst.

9. Verbundstoff nach Anspruch 6, wobei das zweite Teilchen ein Gemisch von Teilchen von sich unterscheidender Zusammensetzung umfasst.

10. Verbundstoff nach Anspruch 1, wobei das Polymer ausgewählt ist aus Polyethylen, Polypropylen, Polybutylen, Acrylnitril-Butadien-Styrol (ABS), Polybutylen-Copolymeren, Polyacetylharzen, Polyacrylharzen, Homopolymeren oder Copolymeren, umfassend Vinylchlorid, Vinylidenchlorid, Fluorkohlenstoff-Copolymeren, Nylon, Phenoxyharzen, Polyphenylether, Polyphenylsulfidmaterialien, Polycarbonatmaterialien, chlorierten Polyetherharzen, Polyphenylenoxidharzen, Polyimidharzen, thermoplastischen Urethan-Elastomeren, Polyamiden, Polyamid-Imid-Polymeren, Polyarylsulfonen, Polybutylenterephthalat, Polybutylennaphthalat, Polyetherimiden, Polyethersulfonen, Polyethylenterephthalat, thermoplastischen Polyamiden, Polyphenylenetherblends, Polyphenylensulfid, Polysulfonen, thermoplastischen Polyurethanen und Polyethylennaphthalat.

11. Verbundstoff nach Anspruch 10, wobei das Polymer ausgewählt ist aus Polyethylen, Polypropylen, einem Homopolymer, umfassend Vinylchlorid, ABS oder Nylon.

12. Verbundstoff nach Anspruch 1, wobei das anorganische Mineralteilchen ausgewählt ist aus Mineralcarbonaten, Mineralaluminaten, Mineralalumo-silicaten, Mineraloxiden, Mineralhydroxiden, Mineralbicarbonaten, Mineralsulfaten, Mineralfluoriden, Mineralphosphaten, und Mineralalumo-phosphaten.

13. Verbundstoff nach Anspruch 1, wobei das anorganische Mineralteilchen ausgewählt ist aus Bauxit (Aluminiumerz), Calciumcarbonat, Calciumhydroxid, Calciumsulfat, Kupfer(I)- und Kupfer(II)sulfid, Bleioxid, Magnesiumcarbonat, Magnesiumoxid, Magnesiumsulfat, Magnesiumalaun-Verbindungen, Kaliumalumosilicat, Kaliumborat, Kaliumcarbonat, Kaliumsulfat, Natriumsilicat und Natriumsulfat.

14. Verbundstoff nach Anspruch 1, wobei das anorganische Mineralteilchen eine hohle oder massive Glaskugel ist.

**Revendications**

1. Composite inorganique et composite polymère comprenant :

   (a) 30 à 87 % en volume d'une particule minérale inorganique ayant une taille de particule Ps supérieure à 5 μm ayant un revêtement de 0,005 à 5 % en poids d'un modificateur interfacial, le pourcentage basé sur le composite ; et
   (b) une phase polymère,

   dans lequel la taille de particule Ps se réfère à la dimension principale de la particule minérale inorganique.

2. Composite selon la revendication 1 dans lequel le composite a une résistance à la traction, telle que mesurée par ASTM D638, de 0,1 à 15 fois celle du polymère de base.

3. Composite selon la revendication 1 dans lequel le composite à un allongement en traction, tel que mesuré par ASTM D638, de 0,10 % à 100 % du polymère de base.

4. Composite selon la revendication 1 dans lequel le composite a une résistance à la traction de 0,10 à 20 fois celle du polymère de base et un allongement en traction de 15 % à 100 % du polymère de base, dans lequel la résistance à la traction et l'allongement en traction sont mesurés par ASTM D638.

5. Composite selon la revendication 1 dans lequel le composite comprend plus de 30 % en volume du matériau inorganique.

6. Composite selon la revendication 1 dans lequel le minéral inorganique a une taille de particule Ps de 10 à 200 μm et le composite comprend en plus une deuxième particule avec une taille de particule $Ps^1$ qui diffère du composite inorganique par au moins 5 μm,
   dans lequel la taille de particule $Ps^1$ se réfère à la dimension principale de la deuxième particule.

7. Composite selon la revendication 1 dans lequel le polymère comprend un fluoropolymère.

8. Composite selon la revendication 1 dans lequel le polymère comprend une polyoléfine de densité élevée.

9. Composite selon la revendication 6 dans lequel la deuxième particule comprend un mélange de particules de composition différente.

10. Composite selon la revendication 1 dans lequel le polymère est sélectionné parmi le polyéthylène, le polypropylène, le polybutylène, l'acrylonitrile-butadiène-styrène (ABS), les copolymères de polybutylène, les résines de polyacétyle, les résines polyacryliques, les homopolymères ou copolymères comprenant du chlorure de vinyle, du chlorure de vinylidène, les copolymères fluorocarbonés, le nylon, les résines phénoxy, le polyphényléther, les matériaux de polyphénylsulfures, les matériaux de polycarbonates, les résines de polyéther chlorées, les résines oxyde de polyphénylènes, les résines polyimides, les élastomères d'uréthane thermoplastiques, les polyamides, les polymères polyamide-imides, les polyarylsulfones, le polybutylène téréphtalate, le polybutylène naphtalate, les polyétherimides, les polyéthersulfones, le polyéthylène téréphtalate, les polyamides thermoplastiques, les mélanges d'éther de polyphénylène, le sulfure de polyphénylène, les polysulfones, les polyuréthanes thermoplastiques, et le naphtalate de polyéthylène.

11. Composite selon la revendication 10 dans lequel le polymère est sélectionné parmi le polyéthylène, le polypropylène, un homopolymère comprenant du chlorure de vinyle, l'ABS ou le nylon.

12. Composite selon la revendication 1 dans lequel la particule minérale inorganique est sélectionnée parmi les carbonates minéraux, les aluminates minéraux, les alumo-silicates minéraux, les oxydes minéraux, les hydroxydes minéraux, les bicarbonates minéraux, les sulfates minéraux, les fluorures minéraux, les phosphates minéraux, et les alumo-phosphates minéraux.

13. Composite selon la revendication 1 dans lequel la particule minérale inorganique est sélectionnée parmi la bauxite (minerai d'aluminium), le carbonate de calcium, l'hydroxyde de calcium, le sulfate de calcium, le sulfure cuivreux et cuivrique, l'oxyde de plomb, le carbonate de magnésium, l'oxyde de magnésium, le sulfate de magnésium, les composés d'alun de magnésium, l'alumo-silicate de potassium, le borate de potassium, le carbonate de potassium, le sulfate de potassium, le silicate de sodium et le sulfate de sodium.

**14.** Composite selon la revendication 1 dans lequel la particule minérale inorganique est une sphère de verre creuse ou solide.

FIG. 1

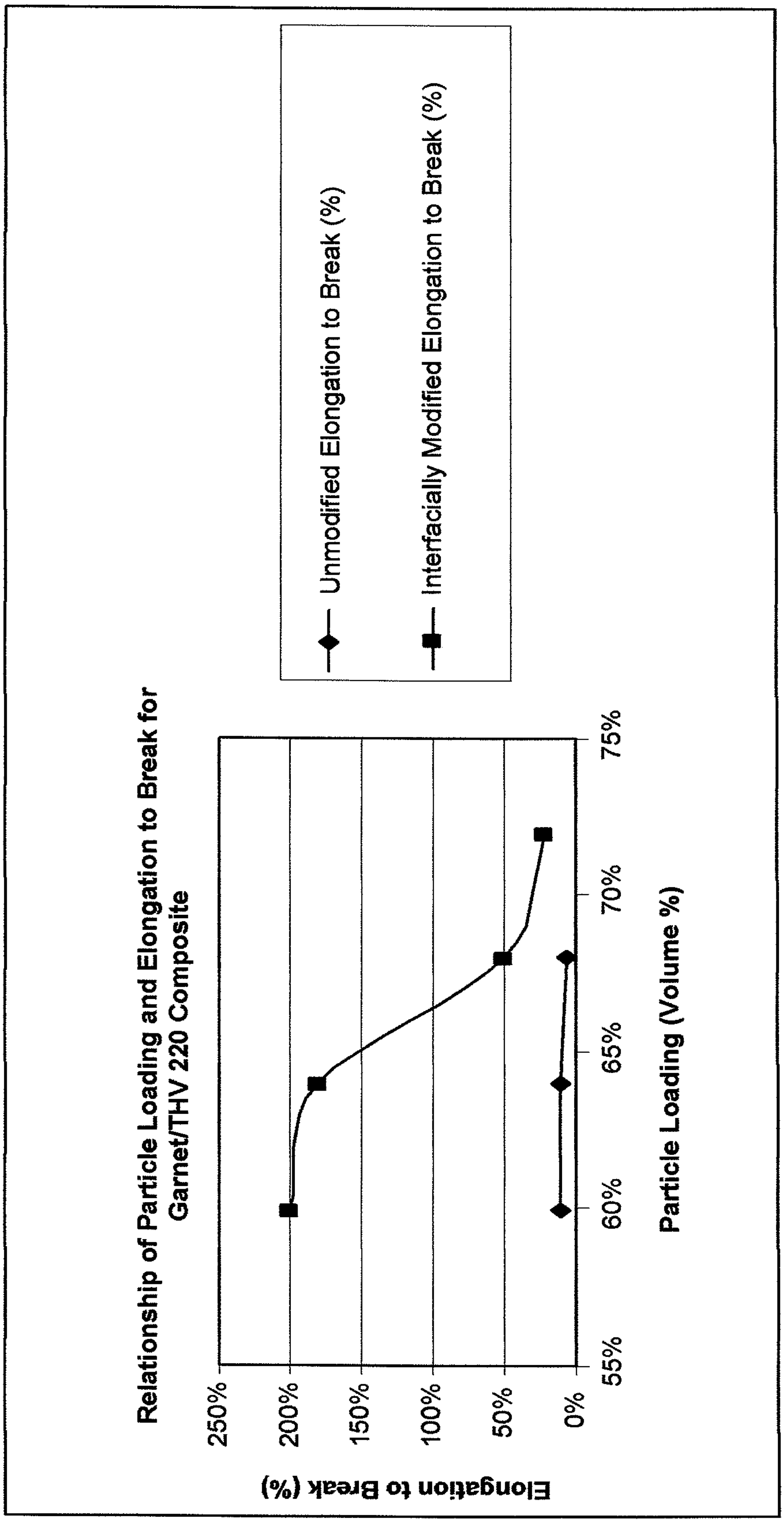
Relationship of Particle Loading and Elongation to Break for Garnet/THV 220 Composite
Elongation to Break (%)
250%
200%
150%
100%
50%
0%
55%
60%
65%
70%
75%
Particle Loading (Volume %)
Unmodified Elongation to Break (%)
Interfacially Modified Elongation to Break (%)

FIG. 2

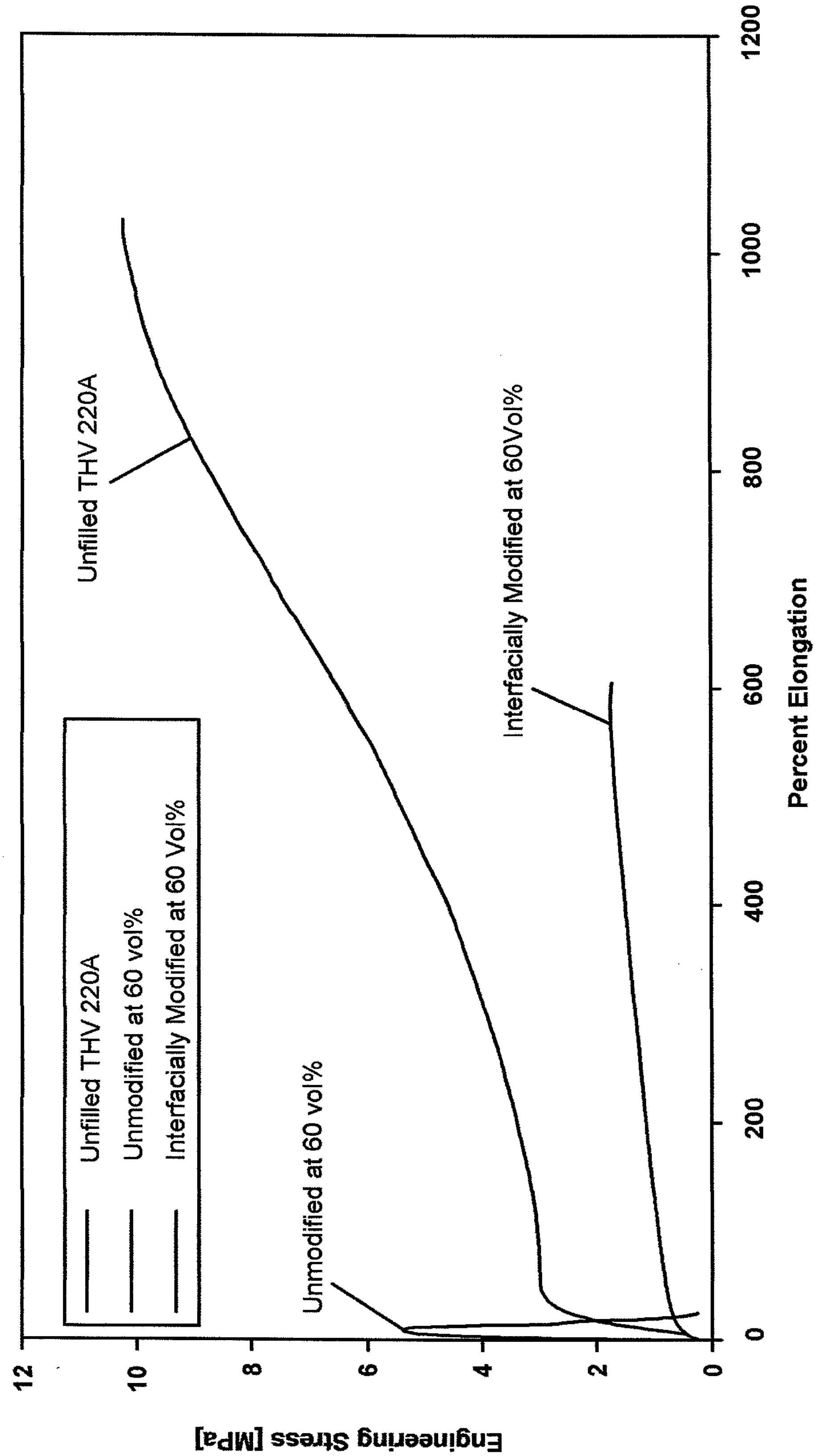
Unfilled THV 220A
Unmodified at 60 vol%
Interfacially Modified at 60 Vol%
Unfilled THV 220A
Interfacially Modified at 60Vol%
Unmodified at 60 vol%
Engineering Stress [MPa]
Percent Elongation
0
2
4
6
8
10
12
0
200
400
600
800
1000
1200

FIG. 3

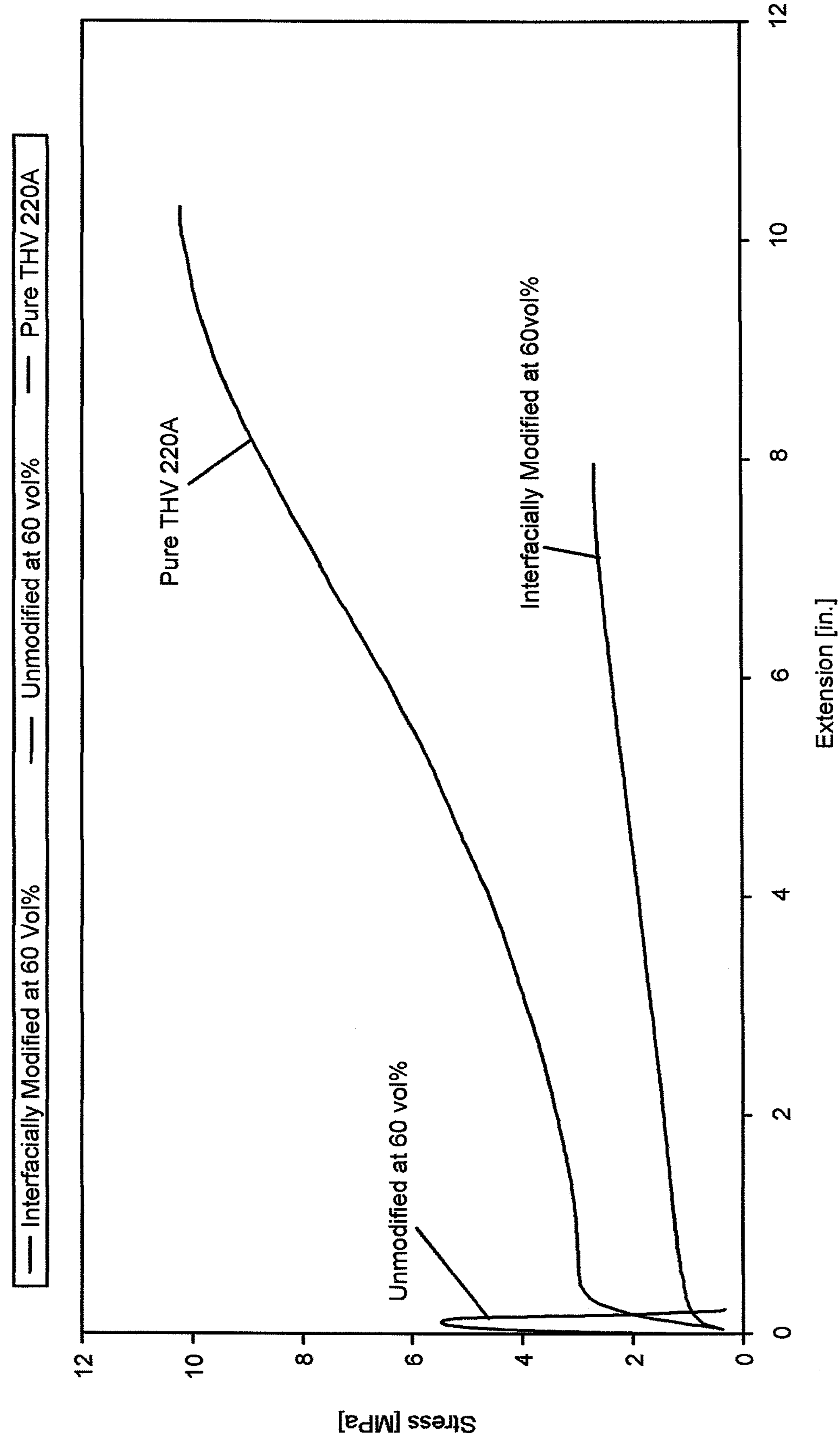

Interfacially Modified at 60 Vol%
Unmodified at 60 vol%
Pure THV 220A
Unmodified at 60 vol%
Pure THV 220A
Interfacially Modified at 60vol%
Stress [MPa]
0
2
4
6
8
10
12
Extension [in.]
0
2
4
6
8
10
12

FIG. 4

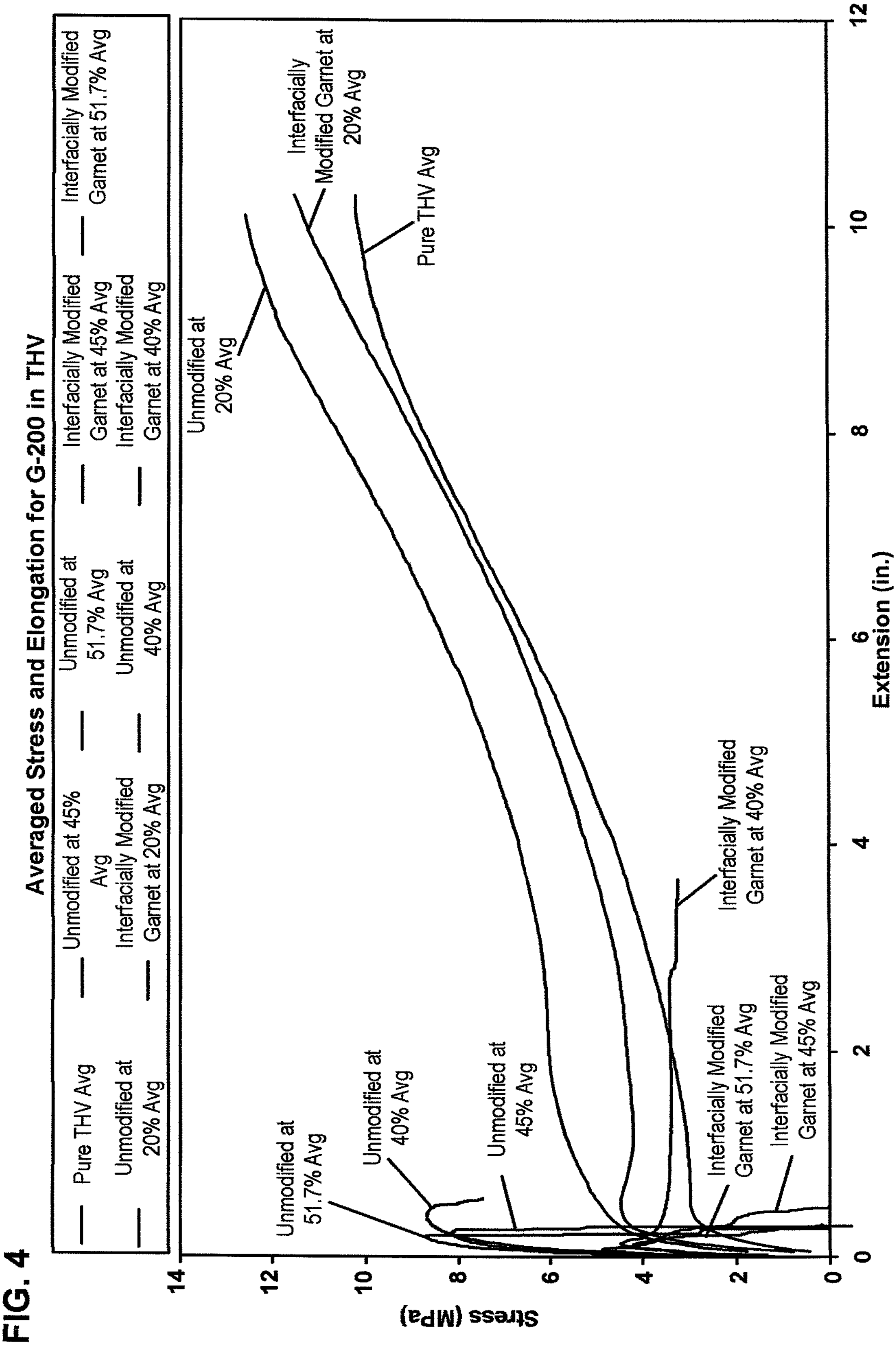
Averaged Stress and Elongation for G-200 in THV
Pure THV Avg
Unmodified at 20% Avg
Unmodified at 45% Avg
Interfacially Modified Garnet at 20% Avg
Unmodified at 51.7% Avg
Unmodified at 40% Avg
Interfacially Modified Garnet at 45% Avg
Interfacially Modified Garnet at 40% Avg
Interfacially Modified Garnet at 51.7% Avg
Stress (MPa)
14
12
10
8
6
4
2
0
Extension (in.)
0
2
4
6
8
10
12
Unmodified at 51.7% Avg
Unmodified at 40% Avg
Unmodified at 45% Avg
Interfacially Modified Garnet at 51.7% Avg
Interfacially Modified Garnet at 45% Avg
Interfacially Modified Garnet at 40% Avg
Unmodified at 20% Avg
Interfacially Modified Garnet at 20% Avg
Pure THV Avg

FIG. 5

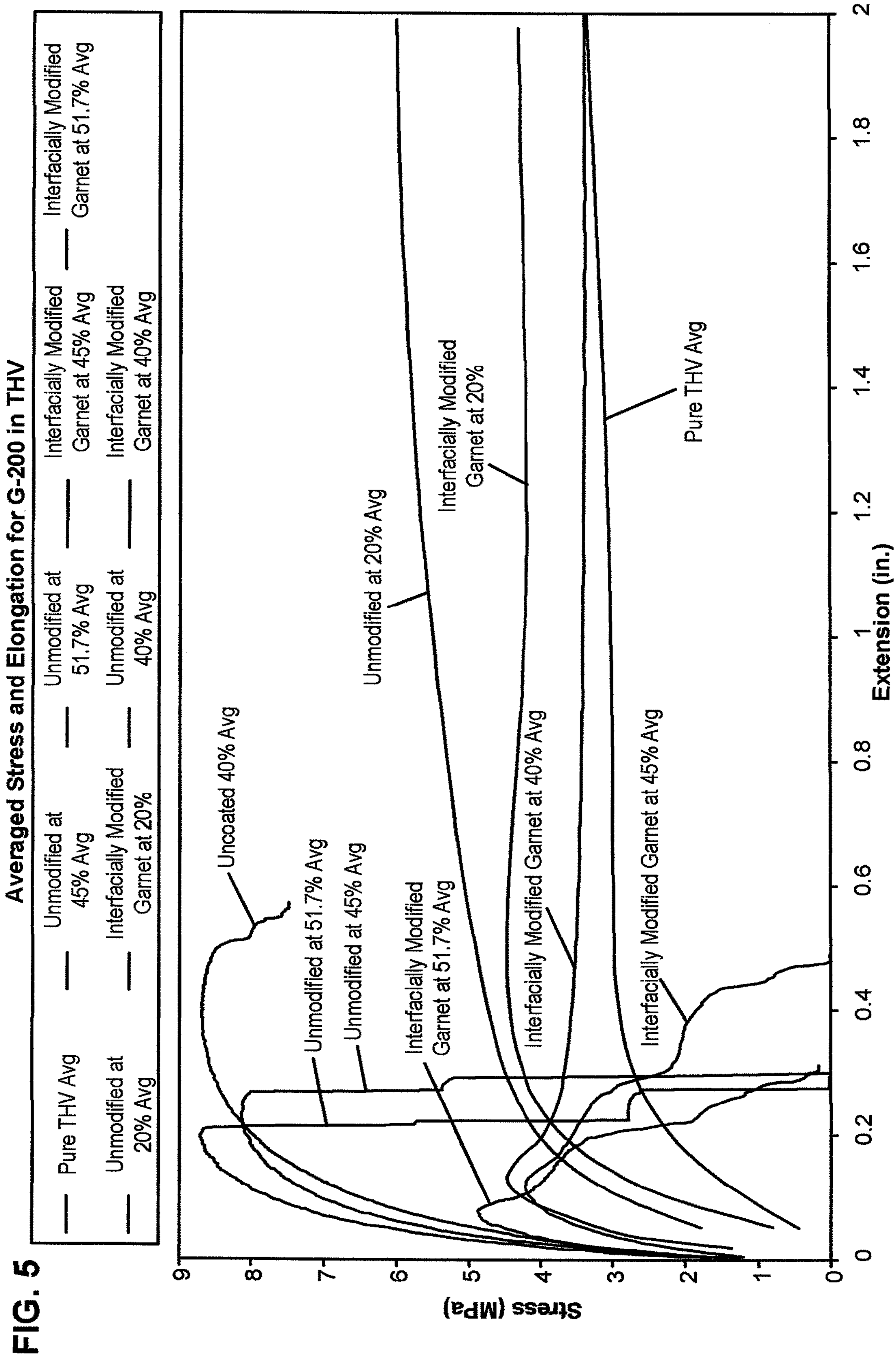
Averaged Stress and Elongation for G-200 in THV
Pure THV Avg
Unmodified at 20% Avg
Unmodified at 45% Avg
Interfacially Modified Garnet at 20%
Unmodified at 51.7% Avg
Unmodified at 40% Avg
Interfacially Modified Garnet at 45% Avg
Interfacially Modified Garnet at 40% Avg
Interfacially Modified Garnet at 51.7% Avg
Uncoated 40% Avg
Unmodified at 51.7% Avg
Unmodified at 45% Avg
Interfacially Modified Garnet at 51.7% Avg
Interfacially Modified Garnet at 40% Avg
Interfacially Modified Garnet at 45% Avg
Unmodified at 20% Avg
Interfacially Modified Garnet at 20%
Pure THV Avg
Stress (MPa)
Extension (in.)
0
1
2
3
4
5
6
7
8
9
0.2
0.4
0.6
0.8
1
1.2
1.4
1.6
1.8
2

FIG. 6

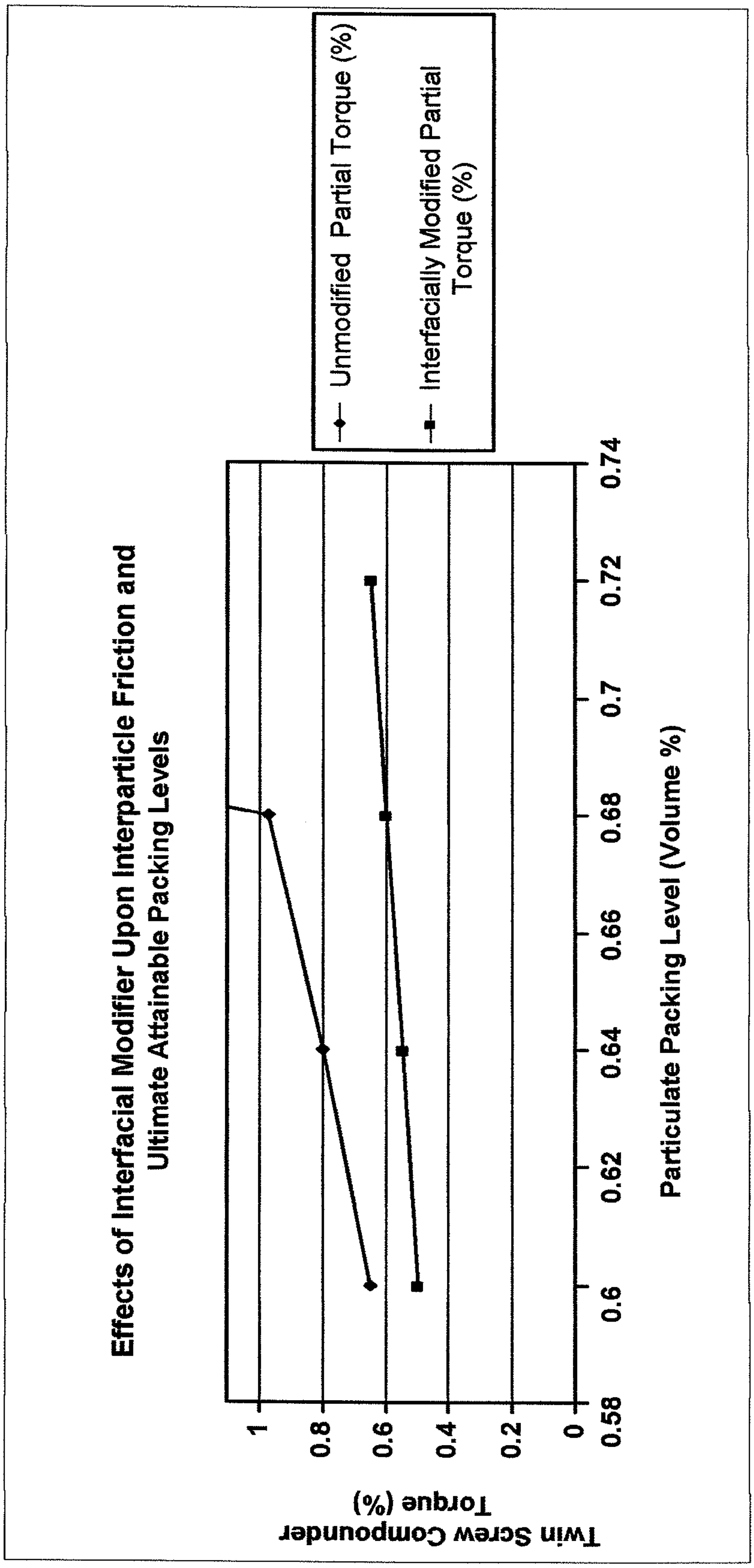
Effects of Interfacial Modifier Upon Interparticle Friction and Ultimate Attainable Packing Levels
Twin Screw Compounder Torque (%)
Particulate Packing Level (Volume %)
Unmodified Partial Torque (%)
Interfacially Modified Partial Torque (%)
0
0.2
0.4
0.6
0.8
1
0.58
0.6
0.62
0.64
0.66
0.68
0.7
0.72
0.74

FIG. 7

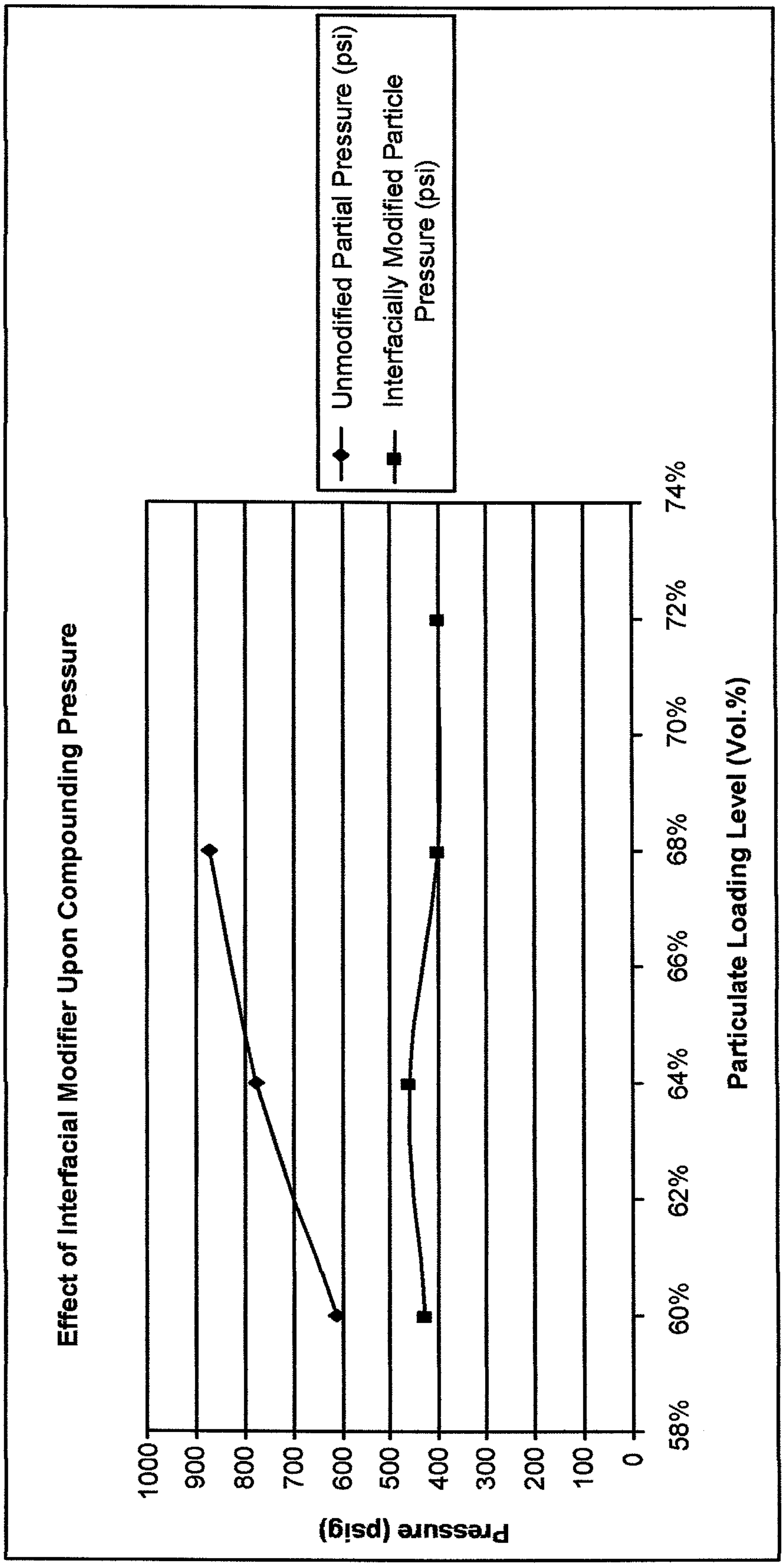
Effect of Interfacial Modifier Upon Compounding Pressure
Pressure (psig)
1000
900
800
700
600
500
400
300
200
100
0
58%
60%
62%
64%
66%
68%
70%
72%
74%
Particulate Loading Level (Vol.%)
Unmodified Partial Pressure (psi)
Interfacially Modified Particle Pressure (psi)

FIG. 8

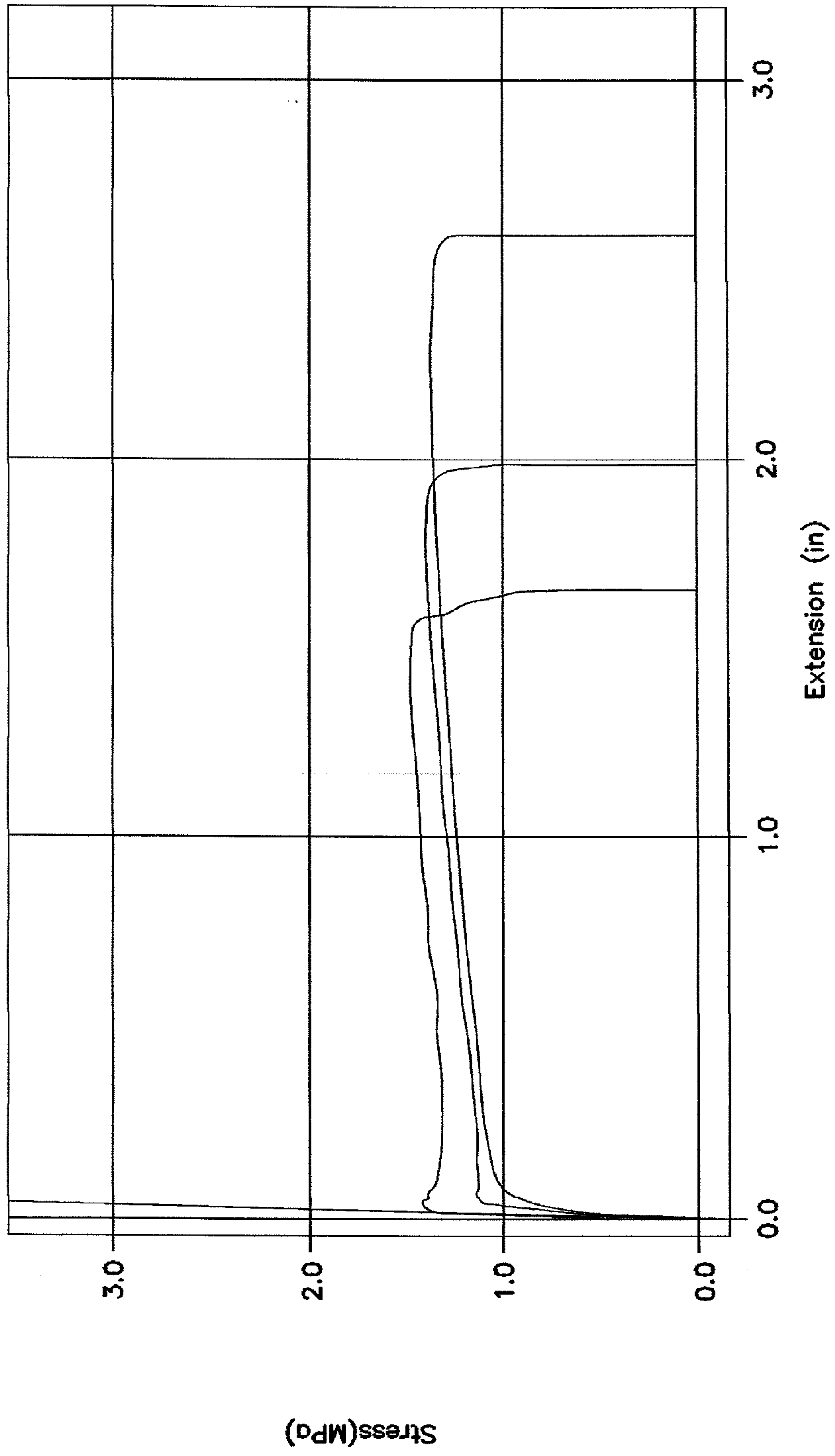

FIG. 9

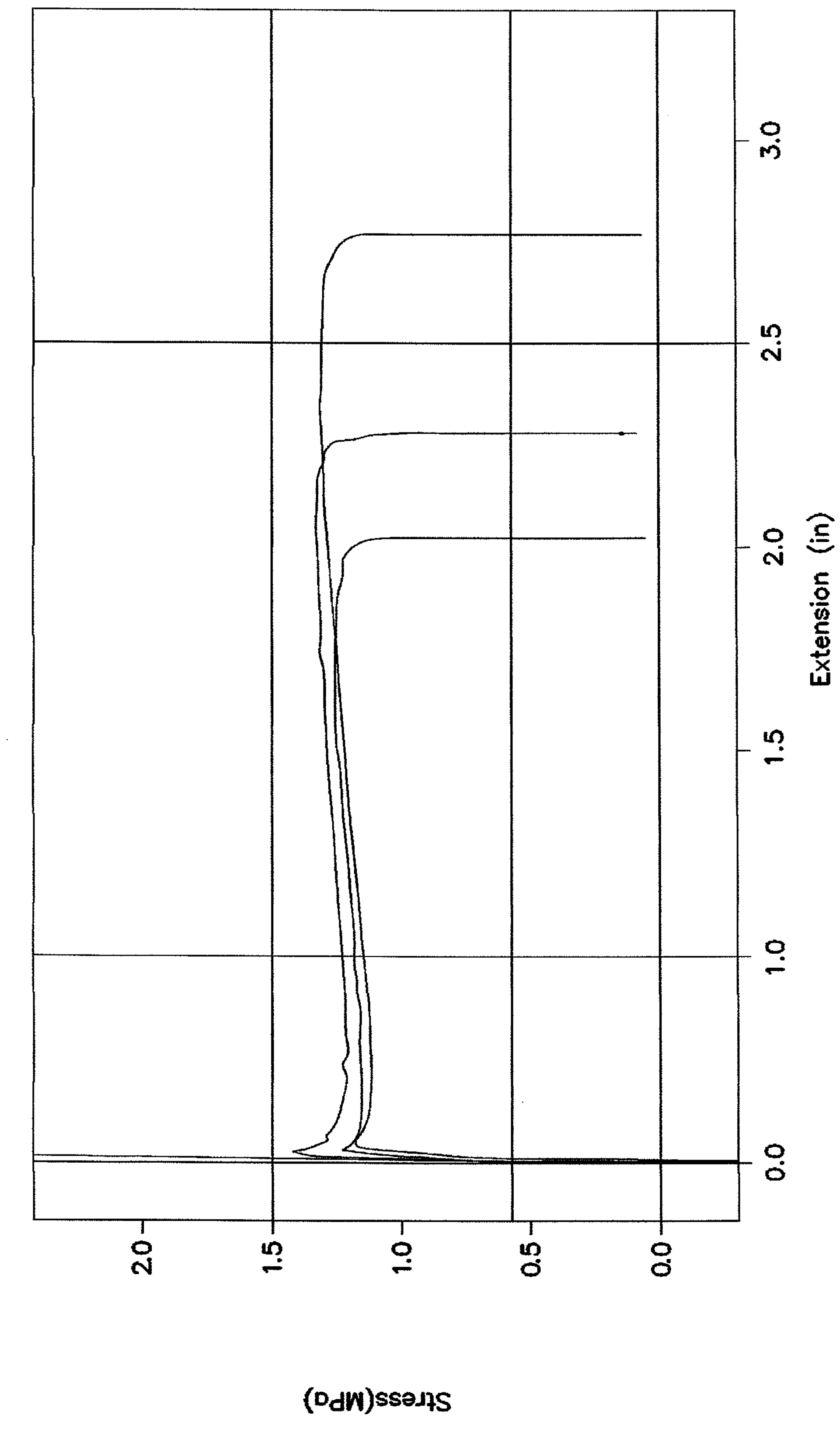

FIG. 10

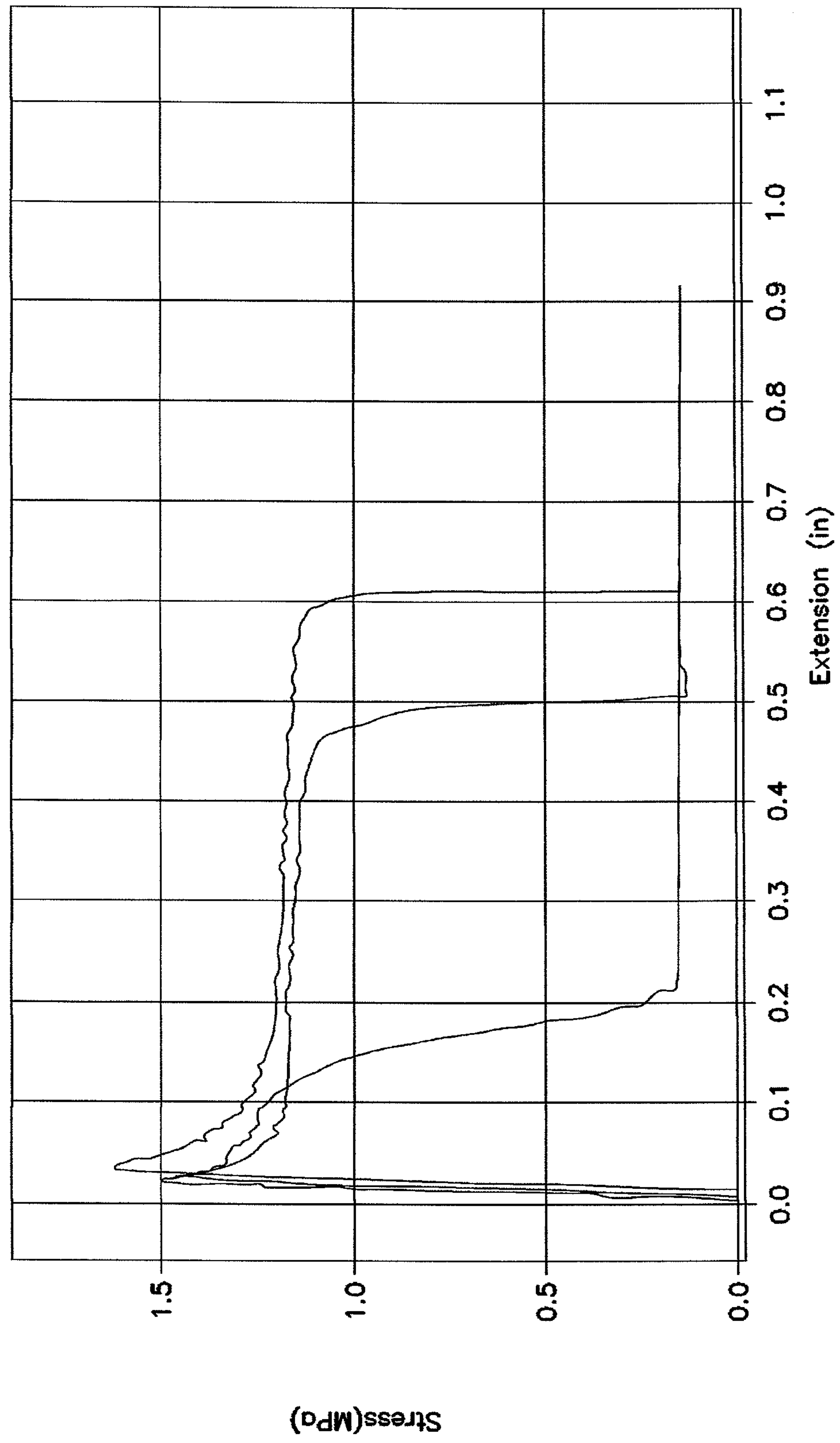
Stress(MPa)
0.0
0.5
1.0
1.5
Extension (in)
0.0
0.1
0.2
0.3
0.4
0.5
0.6
0.7
0.8
0.9
1.0
1.1

FIG. 11

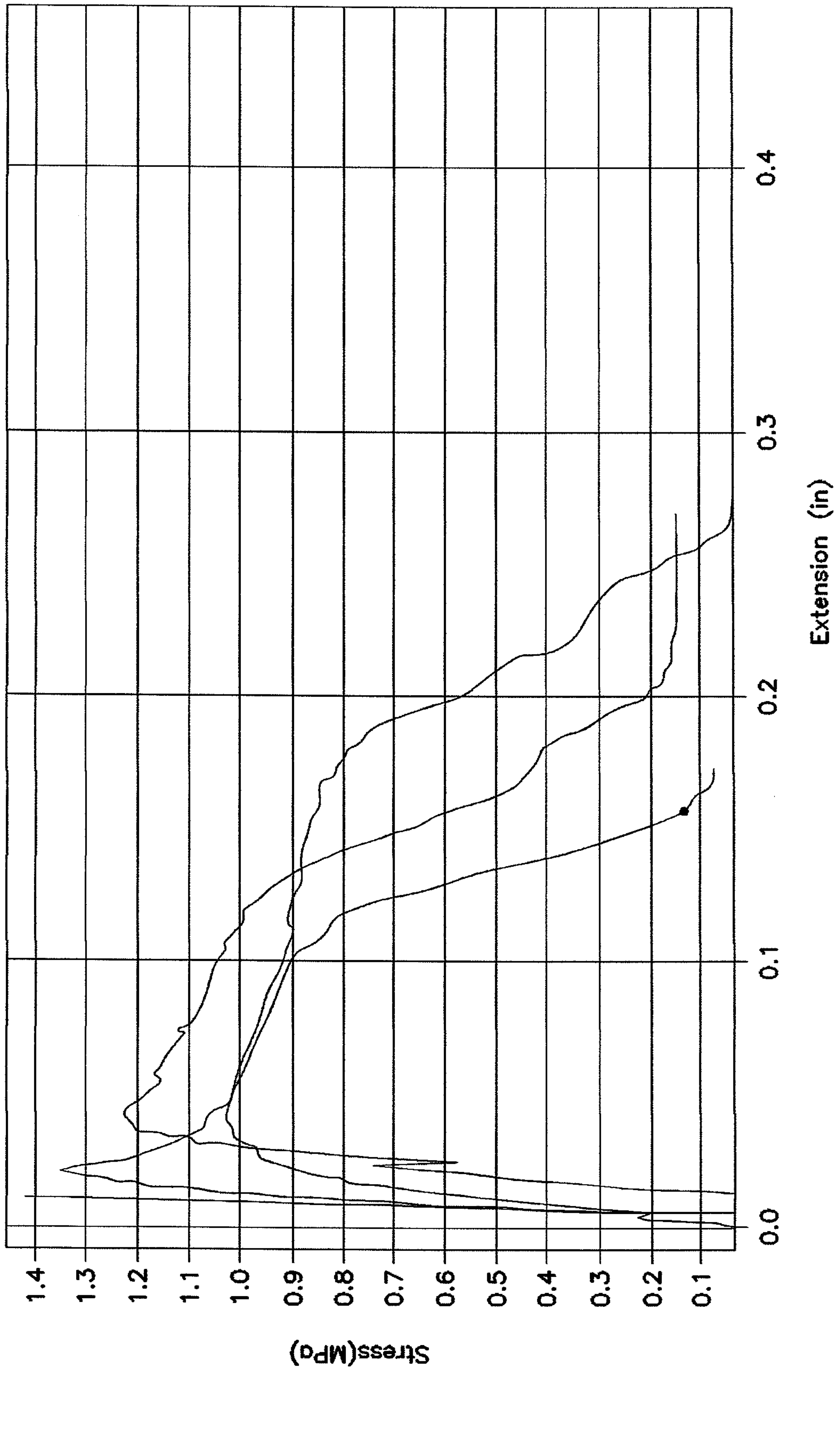
Stress(MPa)
1.4
1.3
1.2
1.1
1.0
0.9
0.8
0.7
0.6
0.5
0.4
0.3
0.2
0.1
0.0
0.1
0.2
0.3
0.4
Extension (in)

FIG. 12

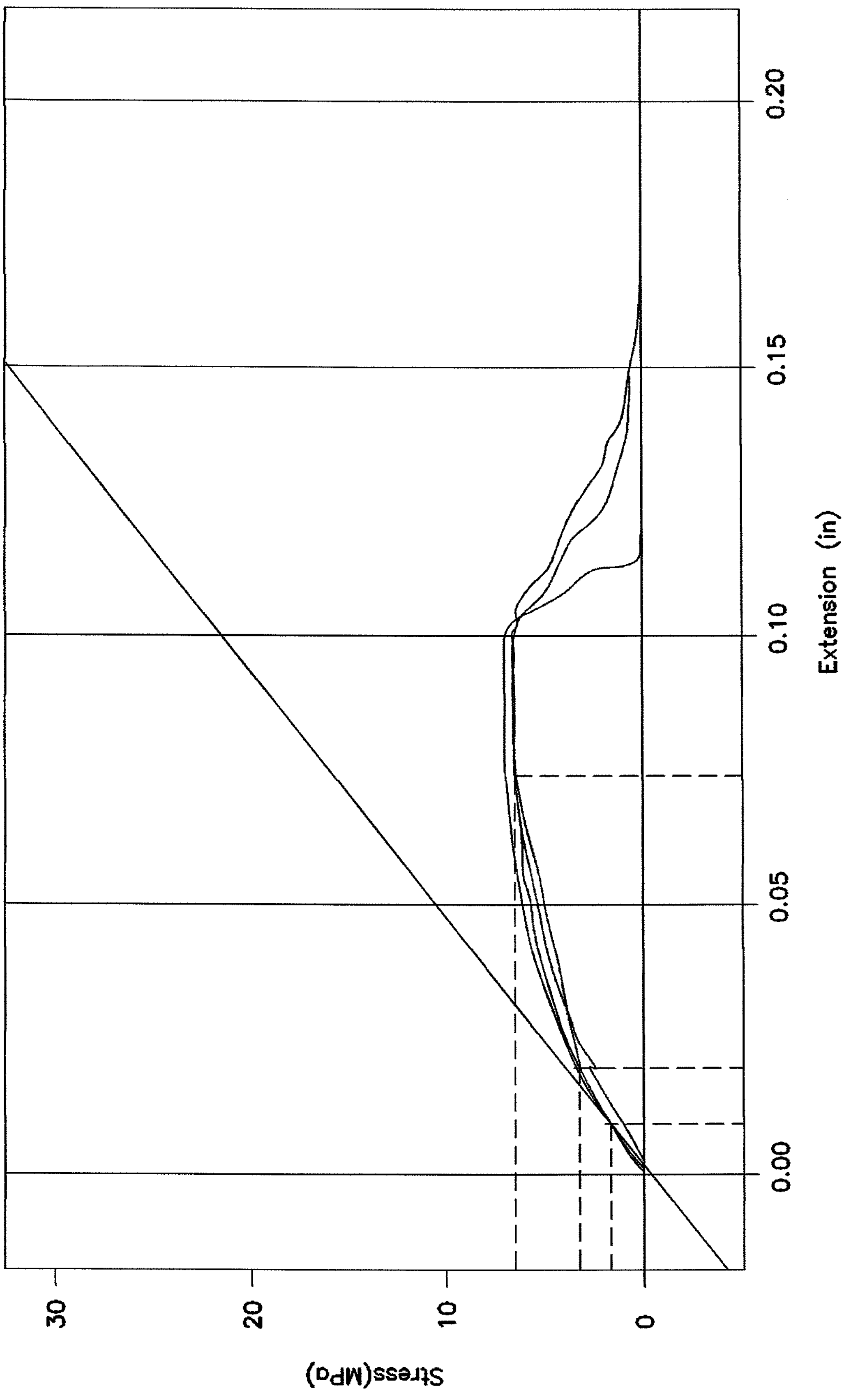

FIG. 13

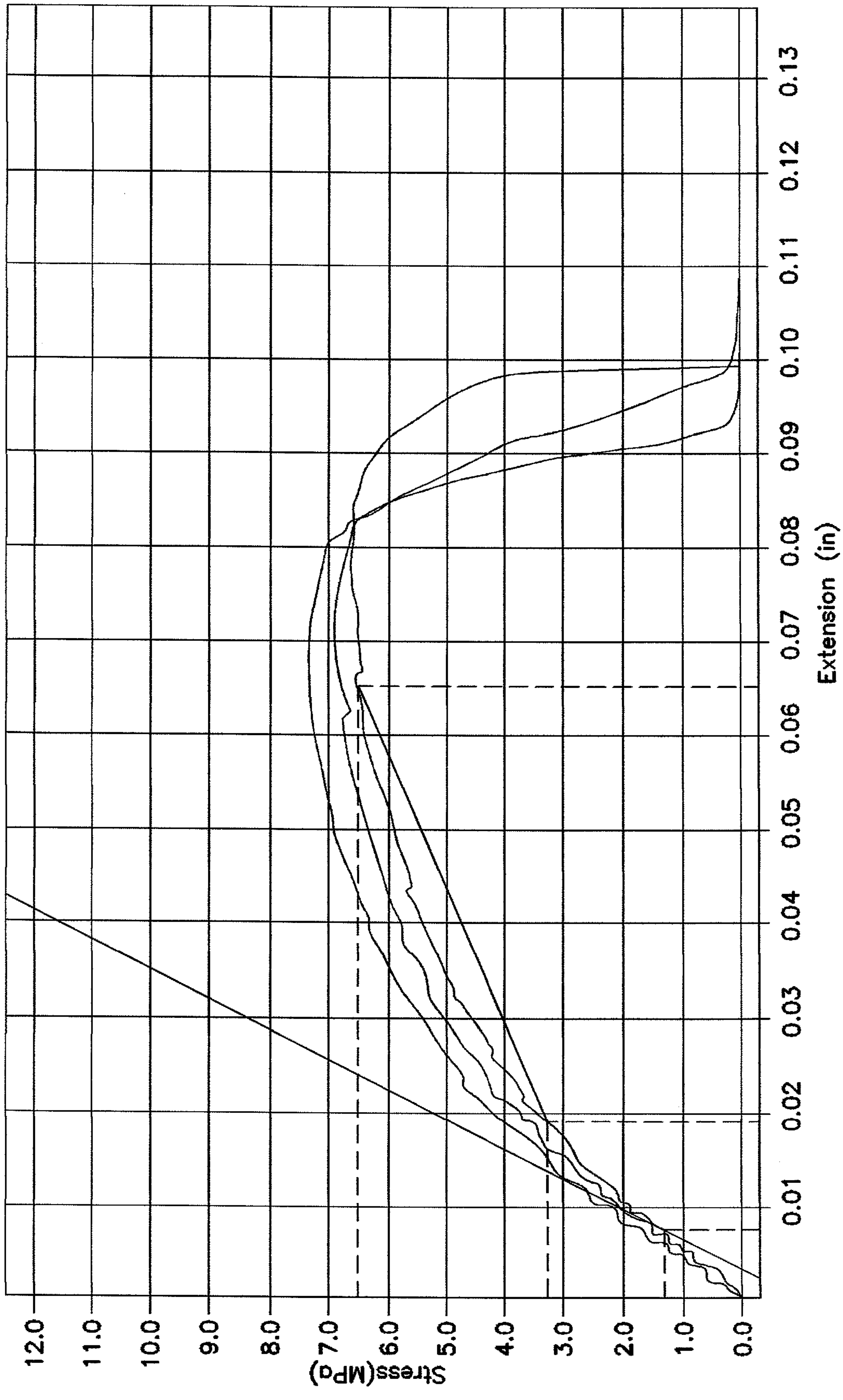
Stress(MPa)
12.0
11.0
10.0
9.0
8.0
7.0
6.0
5.0
4.0
3.0
2.0
1.0
0.0
Extension (in)
0.01
0.02
0.03
0.04
0.05
0.06
0.07
0.08
0.09
0.10
0.11
0.12
0.13

FIG. 14

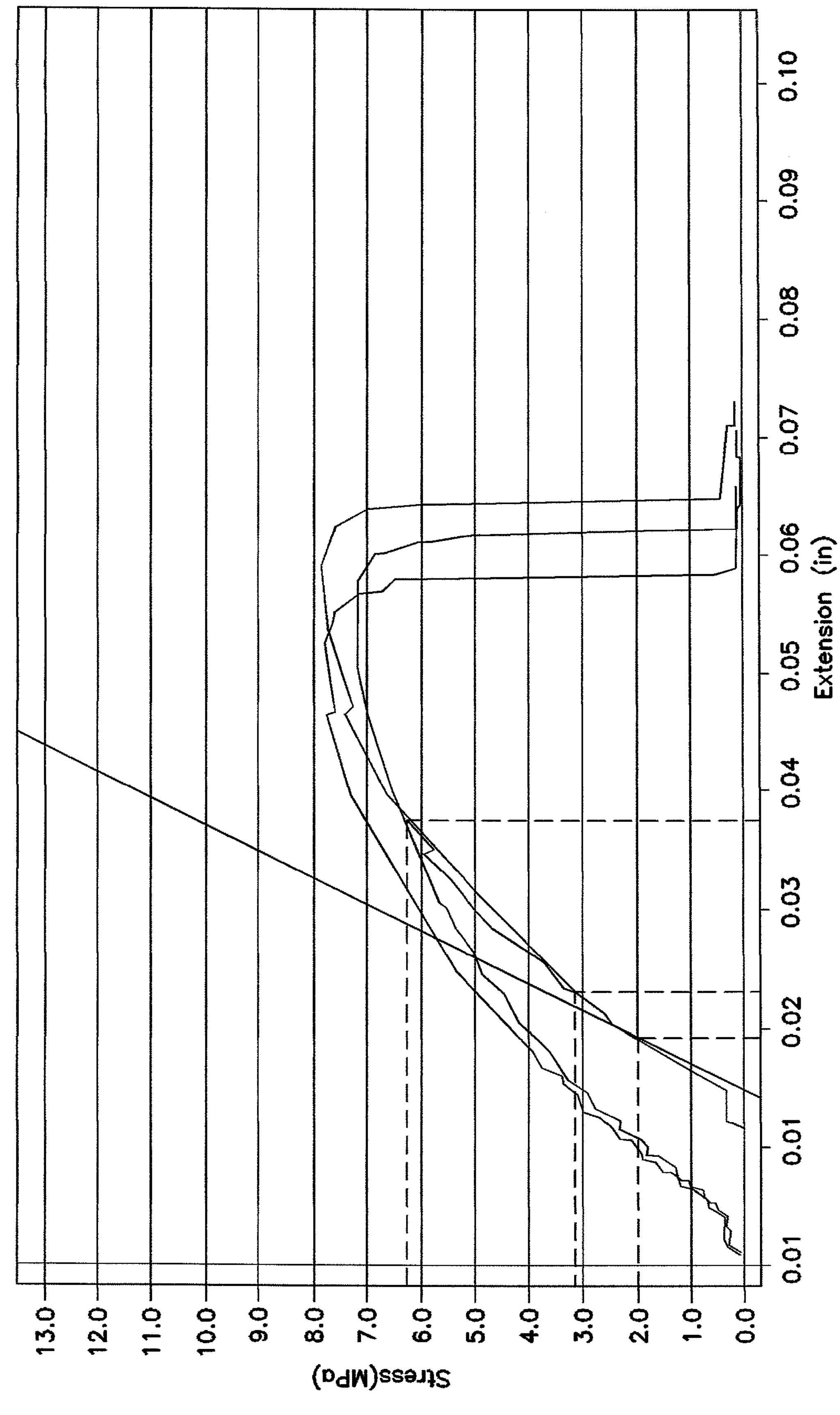
Stress(MPa)
13.0
12.0
11.0
10.0
9.0
8.0
7.0
6.0
5.0
4.0
3.0
2.0
1.0
0.0
0.01
0.01
0.02
0.03
0.04
0.05
0.06
0.07
0.08
0.09
0.10
Extension (in)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 4569978 A, Barber
- GB 827308 A
- US 3178399 A
- US 2968649 A
- US 4257699 A
- US 5017432 A, Eddy
- US 5061965 A, Ferguson
- US 4418186 A
- US 5214106 A
- US 5639838 A
- US 5696216 A


### Non-patent literature cited in the description


- **ERNEST H. NICKEL.** The definition of a mineral. *The Canadian Mineralogist,* 1995, vol. 33, 689-690
- Modern Fluoropolymers. 1997